(19)

Europäisches
Patentamt
European
Patent Office
Office européen
des brevets

(11) **EP 2 651 136 A1**

(12) **EUROPEAN PATENT APPLICATION**
published in accordance with Art. 153(4) EPC

(43) Date of publication:
**16.10.2013 Bulletin 2013/42**

(21) Application number: **11847646.4**

(22) Date of filing: **05.12.2011**

(51) Int Cl.:
***H04N 7/32*** (2006.01)          ***H04N 13/02*** (2006.01)

(86) International application number:
**PCT/JP2011/078065**

(87) International publication number:
**WO 2012/077634 (14.06.2012 Gazette 2012/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.12.2010 JP 2010271259**

(71) Applicant: **Nippon Telegraph And Telephone Corporation**
**Tokyo 100-8116 (JP)**

(72) Inventors:
• **SHIMIZU, Shinya**
  **Musashino-shi**
  **Tokyo 180-8585 (JP)**

• **KIMATA, Hideaki**
  **Musashino-shi**
  **Tokyo 180-8585 (JP)**
• **MATSUURA, Norihiko**
  **Musashino-shi**
  **Tokyo 180-8585 (JP)**

(74) Representative: **Ilgart, Jean-Christophe et al**
**BREVALEX**
**95 rue d'Amsterdam**
**75378 Paris Cedex 8 (FR)**

(54) **MULTIVIEW IMAGE ENCODING METHOD, MULTIVIEW IMAGE DECODING METHOD, MULTIVIEW IMAGE ENCODING DEVICE, MULTIVIEW IMAGE DECODING DEVICE, AND PROGRAMS OF SAME**

(57)      A multiview image encoding method includes, a view synthesis step for generating a view synthesis image at an encoding target view using a reference view image, a prediction image candidate generation step for generating plural intra prediction image candidates for each encoding target region using decoded images in already-encoded regions which are adjacent to the encoding target region, a prediction image candidate evaluation step for determining evaluation values of each intra prediction image candidates using the view synthesis image, a prediction image generation step for generating an intra prediction image from the plural intra prediction image candidates based on the evaluation values, and an image signal encoding step for performing a predictive encoding of an encoding target image in the encoding target regions using the intra prediction image.

FIG. 1

**EP 2 651 136 A1**

**Description**

TECHNICAL FIELD

The present invention relates to methods and devices for encoding and decoding multiview images. Priority is claimed on Japanese Patent Application No. 2010-271259, filed December 6, 2010, the contents of which are incorporated herein by reference.

BACKGROUND ART

A multiview image is a group of images obtained by photographing the same subject and background using a plurality of cameras. In general image encoding, intra-frame prediction, which utilizes the feature that a subject is spatially continuous, is used to achieve efficient encoding. Intra-frame prediction is also known as intra prediction. Intra prediction is a technique that is employed in recent international standards for moving picture coding typified by H.264/AVC (see, for example, Non-patent document 1 for a detailed description of H.264/AVC).

In intra prediction, when a single image is divided into a plurality of blocks and is encoded in a predetermined order such as a raster scan order, the continuous orientation of the subject (or texture) within a block to be encoded is estimated, and by copying image signals of adjacent pixels that have already been coded in accordance with that orientation, a prediction image can be created. Note that in blocks in which intra prediction is utilized, information that shows the orientation in which the intra prediction is to be performed, and also the difference between the image to be encoded and the prediction image are both encoded.

The prediction quality of intra prediction depends on how accurately the continuity of an image to be encoded can be expressed. In H.264/AVC, eight directions are defined as the orientations for performing intra prediction, however, there are methods in which the prediction accuracy is increased by defining an even greater number of orientations in order to heighten the accuracy even further (see, for example, Non-patent document 2). Moreover, as intra prediction methods in which the energy of the image signals is fractionally reduced for blocks such as complex texture that have no directionality, in H.264/AVC, it is possible to use DC prediction in which a mean value of adjacent pixels is used as a prediction value, or Plane prediction in which prediction images having smooth color changes are created.

In multiview image coding, because the multiview images are photographing substantially the same space, a high degree of correlation exists not only within an image, but also between images. Because of this, a technique known as disparity compensated predictive coding is used in which inter-frame differences with images created by compensating disparities between viewpoints are extracted, and then only the signals for these differences are encoded. Disparity compensated prediction is employed in the international standard as H.264/AVC Annex.H.

The disparities used here are differences between the positions where the subject is projected on the image planes of cameras that have been placed in different positions. In disparity compensated prediction, this is expressed as a 2-dimensional vector which is then encoded, however, because these disparities are actually information that is generated depending on the camera and on the position (i.e., the depth) of the subject from the camera, a method known as view synthesis prediction (view interpolation prediction) exists that uses this principle.

View synthesis prediction (view interpolation prediction) is a method in which, using a portion of a multiview image that has already completed processing and for which decoding results have already been obtained, in accordance with the three-dimensional positional relationship between the cameras and the subject, an image obtained by synthesizing (i.e., interpolating) frames for another viewpoint that is to be  encoded or decoded is used as a prediction image (see, for example, Non-patent document 3).

In order to express the 3-dimentional position of a subject, it is common to use a depth map (i.e., a distance image or disparity image: sometimes referred to as a disparity map) in which the distance (i.e., the depth) from a camera to the subject is expressed for each pixel. Instead of using depth maps, it is also possible to use polygon information about a subject, or voxel information about a subject space.

Note that, broadly speaking, methods used to acquire a depth map include a method in which a depth map is created by using infrared pulses or the like, and a method in which a point where the same subject appears on a multiview image is discovered, and a depth map is estimated from that point using the principle of triangulation. For view synthesis prediction, there are no great problems on which method is used to obtain the depth map. Moreover, provided that a depth map can be obtained, then it is not important whether the estimation is made on the encoding side or decoding side.

However, for predictive encoding is being performed, generally, when a depth map that is used on the encoding side does not match the depth map that is used on the decoding side, coding distortions known as drift to be generated. Because of this, either the depth map used on the encoding side is transmitted to the decoding side, or a method in which the depth map is estimated using identical data and methods on both the encoding side and decoding side is used.

Note that the technologies described in Non-patent document 4 through Non-patent document 9 (see below) can be employed as the technology used to implement the present invention. In particular, an example of a method used to create a view synthesis image is explained in Non-patent document 4 through Non-patent document 8.

[Documents of the prior art]

[Patent documents]

Non- patent document 1: Rec. ITU- T H. 264, "Advanced video coding for generic audiovisual services, " March 2009.
Non- patent document 2: K. McCann, W.- J. Han, and I. Kim, "Samsung's Response to the Call for Proposals on Video Compression Technology, " Input Document to Joint Collaborative Team on Video Coding (JCT- VC) of ITU- T SG16 WP3 and ISO/IEC JTC1/SC29/WG11, JCTVC- A124, April 2010.
Non- patent document 3: S. Shimizu, M. Kitahara, H. Kimata, K. Kamikura, and Y. Yashima, "View scalable Multiview Video Coding Using 3- D Warping with Depth Map, " IEEE Transactions on Circuits and Systems for Video Technology, Vol. 17, No. 11, pp. 1485- 1495, November, 2007.
Non- patent document 4: Y. Mori, N. Fukushima, T. Fuji, and M. Tanimoto, "View Generation with 3D warping Using Depth Information for FTV, " In Proceedings of 3DTV- CON2008, pp. 229- 232, May 2008.
Non- patent document 5:  S. Yea and A. Vetro, "View Synthesis Prediction for Rate- Overhead Reduction in FTV, " In Proceedings of 3DTV- CON2008, pp. 145- 148, May 2008.
Non- patent document 6: J. Sun, N. Zheng, and H. Shum, "Stereo Matching Using Belief Propagation, " IEEE Transactions on Pattern Analysis and Machine Intelligence, Vol. 25, No. 7, pp. 787- 800, July 2003.
Non- patent document 7: S. Shimizu, Y. Tonomura, H. Kimata, and Y. Ohtani, "Improved View Interpolation Prediction for Side Information in Multiview Distributed Video Coding, " In Proceedings of ICDSC2009, August 2009.
Non- patent document 8: K. Yamamoto, M. Kitahara, H. Kimata, T. Yendo, T. Fuji, M. Tanimoto, S. Shimizu, K. Kamikura, and Y. Yashima, "Multiview Video Coding Using View Interpolation and Color Correction, " IEEE Transactions on Circuits and Systems for Video Technology, Vol. 17, No. 11, pp. 1436- 1449, November, 2007.
Non- patent document 9: K. Ugur, K. R. Anderson, and A. Fuldseth, "Description of video coding technology proposal by Tandberg, Nokia, Ericsson, " Input Document to Joint Collaborative Team on Video Coding (JCT- VC) of ITU- T SG16 WP3 and ISO/IEC JTC1/SC29/WG11, JCTVC- A119, April 2010.

DISCLOSURE OF INVENTION

[Problems to be Solved by the Invention]

In the above-described conventional technology, by using disparity compensated prediction or view synthesis prediction, it is possible to remove redundancy in the image signal between cameras. Because of this, compared with when images photographed using different cameras are encoded independently, multiview images can be coded efficiently.
However, in a multiview image, both inter- camera correlations and intra- frame correlations exist simultaneously. Because of this, if only disparity compensated prediction or view synthesis prediction is used, it is impossible to remove spatial redundancy using the inter- frame correlations. Consequently, efficient coding cannot be achieved.
In Non-patent document 1, by introducing an adaptive selection between intra prediction and disparity compensated prediction in each block, it becomes possible to utilize both inter-camera correlations and intra-frame correlations. By using this method, more efficient coding can be achieved compared to when only one of these correlations is utilized. However, if just one prediction is selected in each block, by utilizing the one that shows the stronger correlation in each block, then simply by reducing a greater quantity of redundancy, it is impossible to reduce the redundancy which exists simultaneously both in time and inter-camera.
In order to solve this problem, a method in which a weighted average between a prediction image created by a technique that utilizes intra correlations such as intra prediction, and a prediction image created by a technique that utilizes inter-camera correlations such as disparity compensated prediction or view synthesis prediction can be easily conjectured.
By employing this technique, the coding efficiency can be improved to a certain extent. However, creating a prediction image by using a weighted average means nothing more than adjusting the ratio between the proportion of the intra correlation that  is utilized and the proportion of the inter-camera correlation that is utilized. Namely, the intra correlation and the inter-camera correlation are not used simultaneously, and this method amounts to nothing more than having more flexibility when deciding which correlation to utilize. As a result, it does not reduce redundancies that exist simultaneously.
Moreover, in the conventional technology, the prediction accuracy of intra prediction is improved by increasing the directions and methods used in the intra prediction. In order to correctly decode the blocks that have been coded by intra prediction, it is necessary to encode information that is used to identify on the decoding side the prediction image generation method that was used for the encoding. Because of this, if the number of alternatives for the prediction image generation method is increased, as is the case in the conventional technology, then the prediction accuracy of the image signal can be improved, however, the amount of code that is used to identify the prediction image generation method also increases, and the overall effect is that efficient coding cannot be achieved.

The present invention was conceived in view of the above-described circumstances, and it is an object thereof to provide efficient multiview image coding that, by estimating intra correlations that utilize inter-camera correlations for multiview images in which intra correlations and inter-camera correlations exist simultaneously, namely, by estimating an intra prediction method such as the orientation in which the intra prediction is performed using an inter-camera correlation, makes it possible to reduce the amount of information needed to show the intra prediction method, and to achieve efficient multiview image encoding.

[Means for Solving the Problem]

In order to solve the above-described problems and achieve the above-described object, the present invention employs the following means.
In intra prediction, a prediction image is created using the spatial continuity of the subject. Because of this, in general image coding methods, a plurality of intra  prediction image candidates are created by hypothesizing a variety of spatial continuities, and of these, the intra prediction image in which the image to be encoded is most efficiently expressed is used as the prediction image. At this time, in order to create the same prediction image on the decoding side, it is necessary to also encode information that shows which intra prediction image candidate has been used.

In the present invention, a view synthesis image that corresponds to the image to be encoded is created using an image photographed by another camera, and which of the intra prediction image candidates is to be used is decided using this view synthesis image. Because it is possible for an identical view synthesis image to be created on the decoding side, even if there is no information that shows which intra prediction image candidate has been used, it is still possible to create a prediction image from the plurality of intra prediction image candidates using the same method. As a result, in the present invention, although intra prediction is still performed, it is not necessary to encode information showing the applied intra prediction method, so that the effect is obtained that it is possible to reduce the amount of codes consumed to express such information.

Moreover, conventionally, it has only been possible to use a limited number of intra prediction methods due to the relationship between the prediction accuracy and the amount of code required by the information showing the intra prediction method, however, in the present invention, there is no limit to the number of intra prediction methods, and neither is there any requirement to encode the information thereof. Accordingly, by using the present invention, an image to be encoded can be predicted even more accurately, and the effect is also obtained that it is possible to reduce the amount of code required to encode the prediction residue. Specifically, the present invention has the following features.

[First aspect]

The present invention creates a prediction image in each intra prediction method, and compares the quality thereof with a view synthesis image, and then decides a single intra prediction method. On the encoding side, a prediction image is then created using the decided intra prediction method and a coding target image is encoded. Because the same view synthesis method can also be created on the decoding side, the same intra prediction method can be identified by following the same procedure on the decoding side as well. As a result, it is possible to create the same prediction image and correctly decode the image signal. Namely, there is no need to encode the information that is used to show which intra prediction method was used on the encoding side in order to provide such information to the decoding side, and then the amount of code required can be reduced by the corresponding amount.

For example, if there are 9 different types of intra prediction methods, then, in the conventional technology, $\log_2 9 \cong 3.1$ bits of code are required for each block in order to encode the information showing the prediction method, however, in the first aspect this is reduced to 0 bits of code. Furthermore, in the first aspect, because the amount of code is reduced to 0 bits irrespective of the number of intra prediction methods, it is possible to improve the prediction efficiency by increasing the number of intra prediction methods, and to reduce the amount of code required to encode an image signal.

As a result of the foregoing, the first aspect has the effect that it is possible to reduce the amount of code that is required in order to encode information showing the intra prediction method when an image signal within a block undergoes intra prediction encoding.

[Second aspect]

A view synthesis image can be created at quite a high level of accuracy, however, view synthesis images are affected by errors in the depth information and camera parameters and the like, so that localized noise is sometimes generated. Because of this, if the method used to create a prediction image is decided using a view synthesis image as a reference, there is a possibility that the selection of the prediction image will be affected by this localized noise and that a method that does not have the minimum prediction residue will end up being selected.

Therefore, in a second aspect, as an addition to the first aspect, a degree of reliability that shows just how accurate the view synthesis image is calculated, and an evaluation value is weighted for each pixel using this degree of reliability. By doing this, it is possible to alleviate the effects of localized noise, and to improve the probability that a prediction image generation method with the minimum prediction residue will be able to be selected. By minimizing the prediction residue, it is possible to reduce the amount of code in the image signal.

As a result of the foregoing, the second aspect has the effect that it is possible to improve the accuracy of the estimation of the optimum intra prediction method, and to reduce the amount of code contained in the associated image signal.

[Third aspect]

In a third aspect, when the prediction image generation method is being decided, a plurality of intra prediction image candidates are created without using the decoded image and with only using the view synthesis image, and are evaluated. By employing this method, it is possible to decide the prediction image generation method for any desired block without waiting for the finish of the encoding (or decoding) processing for adjacent blocks. Consequently, the processing to decide the prediction image generation method can be performed in parallel with the processing to encode an image signal in accordance with that prediction image generation method, so that an increase in the speed of the processing becomes possible.

[Fourth aspect]

The prediction image generation method that has the minimum prediction residue when an image signal is being encoded cannot be identified unless an image to be encoded that cannot be used on the decoding side is used. Because of this, it could be happened that the prediction residue cannot be reduced to a minimum by the prediction image generation method that was estimated using a view synthesis image that can also be created on the decoding side as a reference. And then even if it is not necessary to encode information that is used to show the prediction image generation method, there is a possibility that the overall amount of code in the block will increase.

Therefore, in a fourth aspect, a comparison is made between an optimal prediction image generation method that was decided using an image to be encoded, and a prediction image generation method that can also be identified on the decoding side by using a view synthesis image, and a binary flag is created that shows whether or not these two are the same. If the two are the same, then only the binary flag is encoded, while if they are not the same, then, in addition to the binary flag, information showing the optimal prediction image generation method is also encoded.

By employing this method, it is possible to know on the decoding side whether or not the estimation is correct, so that even if the estimation is incorrect, coding can be performed using the optimal prediction image generation method.

If it is assumed that N bits are required in order to show a prediction image generation method in the conventional technology, then if the present technology is used, the number of bits required to show a prediction image generation method is $p + (1 - p) \times (N + 1)$ (wherein p is the probability that the estimation is correct). Namely, if the probability that the estimation is correct is 1/N or more, it is possible to reduce the overall amount of code. If there are nine different types of prediction image generation methods (H. 264/AVC), then $N \cong 3$. As a result, if the probability that the prediction is correct is 30% or more, the amount of code can be reduced. If there are 33 types of prediction image generation methods (see Non-patent document 2), the amount of code can be reduced if the probability that a prediction is correct is 20% or more because $N \cong 5$. Consequently, the fourth aspect makes it possible to prevent the amount of code in an image signal from increasing when the estimation of the prediction image generation method is incorrect.

[Effects of the Invention]

According to the present invention, when a multiview image in which both intra correlations and inter-camera correlations exist simultaneously is being encoded, by estimating the intra prediction method using a view synthesis image that has been created from video images photographed by another camera, it is possible to use the inter-camera correlations for predicting the intra prediction method, and to use the intra correlations for the video signal prediction, and to thereby achieve efficient multiview image encoding that utilizes both correlations simultaneously.

BRIEF DESCRIPTION OF THE DRAWING

FIG. 1 is a block diagram showing the structure of a multiview image encoding device according to a first embodiment of the present invention.

FIG. 2 is a processing flowchart for the multiview image encoding device according to the first embodiment of the present invention.

FIG. 3 is a detailed flowchart showing processing to decide prediction image generation according to the first embodiment of the present invention.

FIG. 4 is a block diagram showing another example of the structure of the multiview image encoding device according to the first embodiment of the present invention.

FIG. 5 is a processing flowchart for the multiview image encoding device shown in FIG. 4 according to the first embodiment of the present invention.

FIG. 6 is a block diagram showing yet another example of the structure of the multiview image encoding device according to the first embodiment of the present invention.

FIG. 7 is a detailed flowchart showing the processing performed by an optimal prediction image generation method deciding section according to the first embodiment of the present invention.

FIG. 8 is a diagram showing a comparison between the operations of the multiview image encoding devices (i.e., in FIG. 1 and FIG. 6) according to the first embodiment of the present invention.

FIG. 9 is a diagram showing a comparison between the operations of the multiview image encoding devices (i.e., in FIG. 1 and FIG. 6) according to the first embodiment of the present invention.

FIG. 10 is a diagram showing a comparison between the operations of the multiview image encoding devices (i.e., in FIG. 1 and FIG. 6) according to the first embodiment of the present invention.

FIG. 11 is a diagram showing a comparison between the operations of the multiview image encoding devices (i.e., in FIG. 1 and FIG. 6) according to the first embodiment of the present invention.

FIG. 12 is a block diagram showing yet another example of the structure of the multiview image encoding device according to the first embodiment of the present invention.

FIG. 13 is a block diagram showing the structure of a multiview image encoding device according to a second embodiment of the present invention.

FIG. 14 is a processing flowchart for the multiview image encoding device according to the second embodiment of the present invention.

FIG. 15 is a block diagram showing yet another example of the structure of the multiview image encoding device according to the second embodiment of the present invention.

FIG. 16 is a block diagram showing yet another example of the structure of the multiview image encoding device according to the second embodiment of the present invention.

FIG. 17 is a block diagram showing yet another example of the structure of the multiview image encoding device according to the second embodiment of the present invention.

FIG. 18 is a block diagram showing the structure of a multiview image decoding device according to a third embodiment of the present invention.

FIG. 19 is a processing flowchart for the multiview image decoding device according to the third embodiment of the present invention.

FIG. 20 is a block diagram showing another example of the structure of the multiview image decoding device according to the third embodiment of the present invention.

FIG. 21 is a processing flowchart for the multiview image decoding device shown in FIG. 20 according to the third embodiment of the present invention.

FIG. 22 is a block diagram showing yet another example of the structure of the multiview image decoding device according to the third embodiment of the present invention.

FIG. 23 is a diagram showing a comparison between the operations of the multiview image decoding devices (i.e., in FIG. 18 and FIG. 22) according to the first embodiment of the present invention.

FIG. 24 is a block diagram showing yet another example of the structure of the multiview image decoding device according to the third embodiment of the present invention.

FIG. 25 is a block diagram showing the structure of a multiview image decoding device according to a fourth embodiment of the present invention.

FIG. 26 is a processing flowchart for the multiview image decoding device according to the fourth embodiment of the present invention.

FIG. 27 is a processing flowchart showing another example of processing performed by the multiview image decoding device according to the fourth embodiment of the present invention.

FIG. 28 is a block diagram showing yet another example of the structure of the multiview image decoding device according to the fourth embodiment of the present invention.

FIG. 29 is a block diagram showing yet another example of the structure of the multiview image decoding device according to the fourth embodiment of the present invention.

FIG. 30 is a block diagram showing yet another example of the structure of the multiview image decoding device according to the fourth embodiment of the present invention.

FIG. 31 is a view showing an example of the hardware structure when a multiview image encoding device according to the fourth embodiment of the present invention is formed by a computer and a software program.

FIG. 32 is a view showing an example of the hardware structure when the multiview image decoding device according to the fourth embodiment of the present invention is formed by a computer and a software program.

## EMBODIMENTS FOR CARRYING OUT THE INVENTION

Hereinafter, embodiments of the present invention will be described with reference made to the drawings.

[First embodiment: Multiview image encoding device]

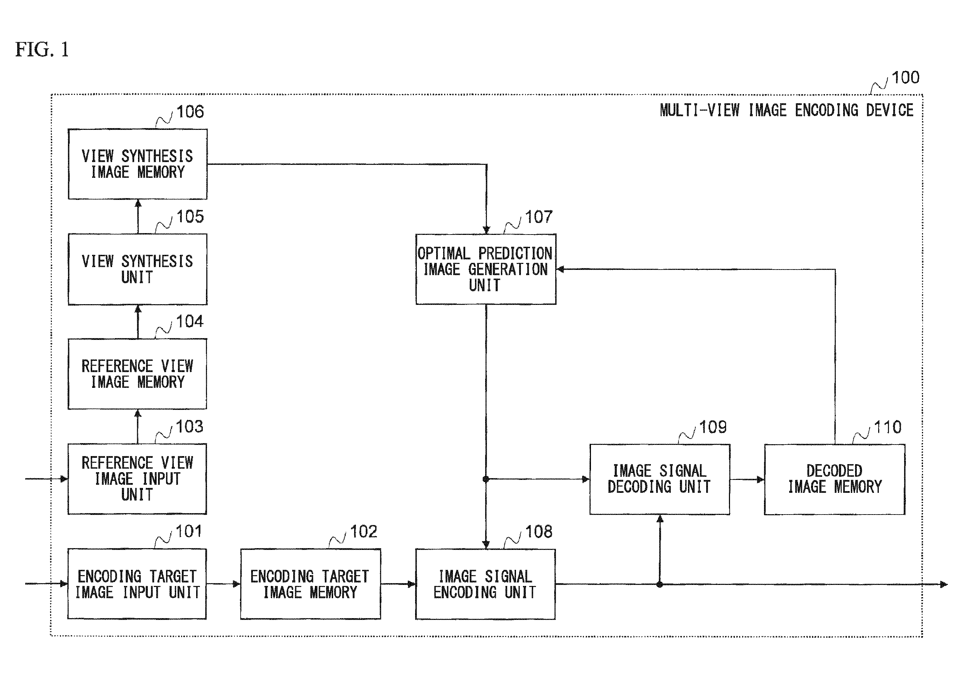

Firstly, a first embodiment of the present invention will be described. FIG. 1 is a block diagram showing the structure of a multiview image encoding device according to a first embodiment of the present invention. As is shown in FIG. 1, a multiview image encoding device 100 is provided with an encoding target image input unit 101, an encoding target image memory 102, a reference view image input unit 103, a reference view image memory 104, a view synthesis unit 105, a view synthesis image memory 106, an optimal prediction image generation unit 107, an image signal encoding unit 108, an image signal decoding unit 109, and a decoded image memory 110.

The encoding target image input unit 101 receives inputs of images of views that are to be encoded. Hereinafter, these views that are to be encoded will be referred to as 'encoding target views', and images thereof will be referred to as 'coding target images'. The encoding target image memory 102 stores the encoding target images.

The reference view image input unit 103 receives inputs of images that are obtained by photographing the same subject at the same time from a different view from the encoding target view. Hereinafter, this different view from the encoding target view will be referred to as a reference view, and an image thereof will be referred to as a reference view image. The reference view image memory 104 stores the reference view images.

The view synthesis unit 105 synthesizes images of the encoding target view using the reference view images. Hereinafter, the synthesized images will be referred to as view synthesis images. The view synthesis image memory 106 stores the view synthesis images.

The optimal prediction image generation unit 107 has functional portions that include a prediction image candidate generation unit and a prediction image evaluation unit, and, using view synthesis images of an encoding target area, generates prediction images of encoding target areas from decoded images of areas adjacent to the encoding target areas. The image signal encoding unit 108 performs predictive encoding on the encoding target images using the prediction images. The image signal decoding unit 109 decodes a decoded image from the generated code data using the prediction images. The decoded image memory 110 stores the decoded images.

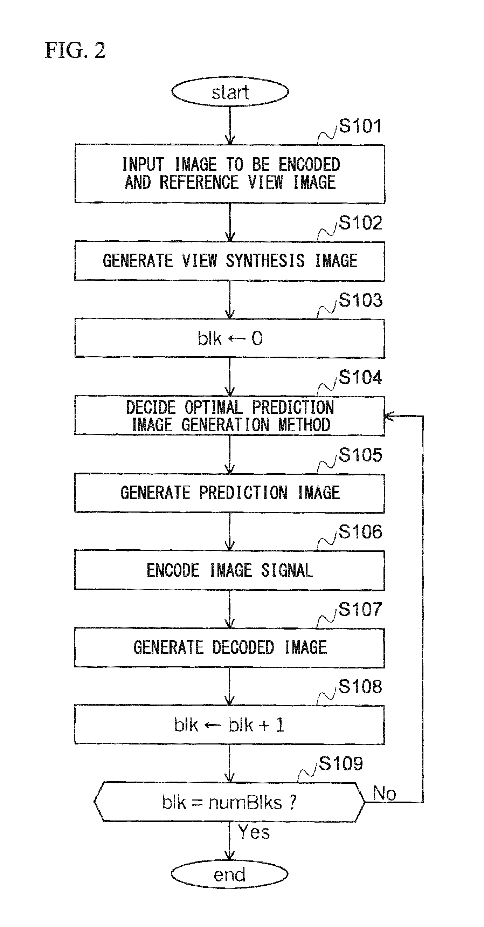

FIG. 2 is a flowchart illustrating operations of the multiview image encoding device 100 according to the first embodiment. The processing executed by this multiview image encoding device 100 will be described in detail in accordance with this flowchart.

Firstly, the encoding target image input unit 101 receives an encoding target image 'Org', which is stored in the encoding target image memory 102. Reference view images $Ref_n$ (wherein n = 1, 2, ..., N) that were photographed from reference viewpoints at the same time as the encoding target image 'Org' are then input by the reference view image input unit 103, and are stored in the reference view image memory 104 (step S101). The reference view images that are input here are obtained by decoding an image that has already been encoded. The reason for this is that, by using information that is absolutely identical to information obtained by the decoding device, it is possible to suppress the occurrence of coding artifacts such as drift and the like. However, if this type of coding artifacts is to be permitted to occur, then it is also possible for an original image that has not yet been encoded to be input. Note that 'n' is an index showing the reference view, while 'N' is the number of reference views that can be used.

Next, in the view synthesis unit 105, an image photographed at the same viewpoint and at the same time as the encoding target image is synthesized using the image signal of the reference view images, and the view synthesis image 'Syn' is stored in the view synthesis image memory 106 (step S102). Any methods can be used to create this view synthesis image. For example, if depth information for the reference view image is supplied in addition to the reference view image, then the techniques described in Non-patent document 3 and Non-patent document 4 and the like may be used.

Moreover, if depth information for the encoding target image is supplied, then the technique described in Non-patent document 5 and the like may be used.

If no depth information is available, after creating depth information for the reference view image or the encoding target image by using techniques such as the stereo method or depth estimation method described in Non-patent document 6, the aforementioned techniques are applied so that a view synthesis image is created (see Non-patent document 7). Moreover, it is also possible to employ a method in which no depth information is created explicitly, but instead a view synthesis image is created directly from the reference view image (see Non-patent document 8).

Note that, in order to use these techniques, normally, camera parameters that show the positional relationship of the cameras and the projection process employed by the cameras are required. These camera parameters can also be estimated from the reference view images. Note that if the depth information and camera parameters and the like are not estimated on the decoding side, information relating thereto that was used within the encoding device must also be encoded and transmitted.

Once the view synthesis image has been generated, the encoding target image is divided, and a prediction image is generated for each of the divided areas. An image signal of the encoding target image is then encoded (steps S103 through S109).

Namely, if the block index to be encoded is expressed as 'blk', and the total number of blocks to be encoded is expressed as 'numBlks', then after 'blk' has been initialized as 0 (i.e., step S103), the following processing (i.e., step S104 through step S107) is repeated while 1 is added to 'blk' (step S108) until 'blk' reaches 'numBlks' (step S109).

Note that provided that it is possible to generate the above-described view synthesis image for each block, then it is also possible for the view synthesis image to be generated as a part of the processing that is repeated for each block to be encoded. For example, if depth information is provided for the encoding target image, then it is possible to generate a view synthesis image for each block.

In the processing that is repeated for each block to be encoded, firstly, an optimal prediction image generation method 'mode' is decided by the optimal prediction image generation unit 107 for the block 'blk' (step S104) using 'Syn [blk] ', the view synthesis image for that block 'blk', and a prediction image for the block 'blk', 'Pred [blk] ', is generated (step S105) using decoded images for areas adjacent to the block 'blk' that are stored in the decoded image memory 110.

The process to decide the optimal prediction image generation method for the block 'blk' is to determine an intra prediction method which provides the maximum suitability or the minimum divergence from among a predefined group of prediction methods with the view synthesis image 'Syn[blk]' being regarded as a target image. In this first embodiment, an evaluation value which expresses the divergence is used. Specific examples of an evaluation value showing this divergence include the SAD (sum of absolute differences) with the view synthesis image expressed by the following Formula (1) and the SSD (some of squared differences) with the view synthesis image expressed by the following Formula (2).

$$\text{cost} (m) = \Sigma_p \, |\text{Syn} [p] - \text{Pred}_m [p] | \qquad \text{Formula (1)}$$

$$\text{cost} (m) = \Sigma_p \, (\text{Syn} [p] - \text{Pred}_m [p] )^2 \qquad \text{Formula (2)}$$

Here, cost is the evaluation value, m is an index value showing the method used to generate the intra prediction image, and $\text{Pred}_m$ shows the prediction image candidates that are generated in accordance with the method m from decoded images adjacent to the block 'blk' that are stored in the decoded image memory 110. '$\Sigma_p$' represents a sum for '$\forall p \in blk$'. Another method in addition to these is a method in which a value obtained by transforming differential values between a view synthesis image and prediction image candidates using DCT or a Hadamard transformation or the like is used. If this transform is expressed as a matrix A, then it can be expressed using the following Formula (3) . Note that $\| X \|$ expresses the norm of X.

$$\text{cost} (m) = \| \, A \cdot (\text{Syn} [blk] - \text{Pred}_m [blk]) \, \| \qquad \text{Formula (3)}$$

Moreover, in addition to a method in which only the divergence between a view synthesis image and prediction image candidates is measured, it is also possible to use an 'RD cost' in which the amount of code and the amount of distortion are also considered. The 'RD cost' used here can be expressed by the following Formula (4) using an amount of code 'R (m) ' when 'Syn [blk] ' is encoded with 'Pred$_m$ [blk] ' used as a prediction image, and an amount of distortion 'D (m) ' from the 'Syn [blk] ' of the decoded image obtained from the result thereof. Note that 'λ' is a Lagrange undetermined multiplier, and a predetermined value is used.

$$\text{cost (m)} = \text{D (m)} + \lambda\text{R (m)} \qquad\qquad \text{Formula (4)}$$

Accordingly, in step S104, processing to determine an optimal prediction image generation method that minimizes the evaluation value is performed as expressed in Formula (5) .

$$\text{mode} = \text{argmin}_m (\text{cost (m)}) \qquad\qquad \text{Formula (5)}$$

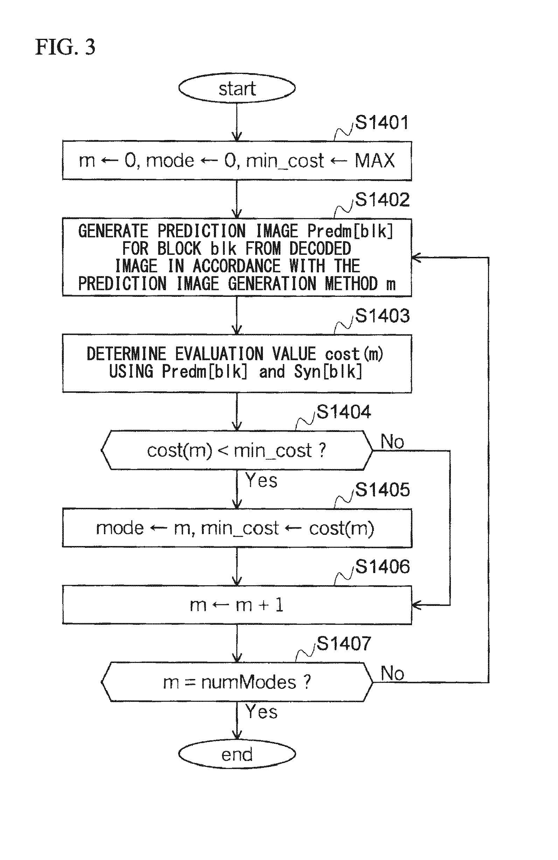

In FIG. 3, a detailed flow of the processing to decide the prediction image generation that is performed in step S104 according to the first embodiment of the present invention is shown. When deciding a prediction image generation, an evaluation value is calculated for each prediction image generation method, and the optimal prediction image generation method is decided by comparing these evaluation values.

Namely, with the prediction image generation method index 'm' set to 0, a variable 'mode' which recodes the prediction image generation method having the best evaluation value from among the prediction image generation methods that have been evaluated also set to 0, and an evaluation value 'min_ cost' in the prediction image generation method 'mode' set to the maximum value 'MAX' that can never be obtained, these are all initialized (step S1401), and then while 'm' is increased by 1 (step S1406), the following processing (step S1402 to step S1405) is repeated until 'm' reaches the number 'numModes' of prediction image generation methods (step S1407) . Note that, here, a case is shown in which the smaller the evaluation value, the better the prediction image generation method.

In the processing that is repeated for each prediction image generation method, firstly, in accordance with the prediction image generation method that is shown by 'm', a prediction image candidate 'Pred$_m$ [blk] ' is generated (step S1402) using decoded images adjacent to the block 'blk' that are stored in the decoded image memory 110.

Once a prediction image candidate has been generated, the evaluation value 'cost (m)' is determined (step S1403) by comparing the prediction image candidate with the view synthesis image. For this calculation of the evaluation value, any desired formula such as the above-described Formula (1) to Formula (4) and the like may be used provided that it is the same on the decoding side.

Once the evaluation value has been calculated, a check is made as to whether or not that value is smaller than 'min_cost' (step S1404), and if it is smaller, 'mode' is rewritten with 'm', and 'min_cost' is rewritten with 'cost (m)' (step S1405), and the routine moves to the next prediction image generation method. If the value is equal to or more than 'min_cost', then the routine moves without any further action being taken to the next prediction image generation method. Note that 'mode' when the processing finally arrives at 'end' is the optimal prediction image generation method for the block 'blk'.

The processing to generate the prediction image 'Pred[blk]' in step S105 is expressed by the following Formula (6). Note that when the evaluation of step S104 is being performed, it is also possible for the prediction image candidates having the smallest evaluation values to be stored, and for the stored prediction image candidates to be set as the prediction image without generating a prediction image via the prediction method 'mode' obtained in step S105.

$$\text{Pred[blk]} = \text{Pred}_{\text{mode}} [\text{blk}] \qquad\qquad \text{Formula (6)}$$

As the group of methods that are used to generate an intra-prediction image, any method may be included therein provided that the same method is used on the decoding side, and there is no particular limit on the number of methods in the group. For example, as in the case of H.264/AVC intra prediction, it is possible to use a group that includes intra prediction that follows eight different prediction directions, DC prediction in which a prediction image is generated using average values of the decoded images of adjacent pixels, and Plane prediction in which a gradation is assumed and linear interpolation is performed on adjacent pixels. Moreover, as in the case of Non-patent document 2 and Non-patent document 9, it is also possible to add even more prediction methods to the group. Moreover, as in the case of Non-patent document 9, it is also possible to add to the group a method in which partial encoding is performed in advance, and then, using the resulting information, bi-directional prediction is performed.

Once a prediction image has been obtained, an image signal for the block 'blk', 'Org [blk]', is predictively encoded by the image signal encoding unit 108 (step S106). There are no particular restrictions on this encoding method. In general encoding method such as MPEG-2 or H.264/AVC, encoding is performed by applying a transformation such as DCT, quantization, binarization, and entropy encoding on a differential signal (Org [blk]- Pred [blk]) between the image signal and the prediction image of the block 'blk',

Next, in the image signal decoding unit 109, using the code data obtained as the result of the encoding and also the prediction image, an image signal is decoded for the block 'blk', and a decoded image 'Dec [blk]', which is the result of the decoding, is stored in the decoded image memory 110 (step S107). Here, a technique that corresponds to the technique used for the encoding is used. For example, if general encoding method such as MPEG-2 or H.264/AVC is employed, the coded data is subjected to entropy decoding, inverse binarization, inverse quantization, and inverse transformation such as IDCT. A prediction signal is then added to the two-dimensional signal that is obtained as a result, and, finally, the image signal is decoded by performing clipping within the range of the pixel values. The decoded image signal is used to generate a prediction signal that is used for encoding other blocks.

In the first embodiment, it is assumed that view synthesis images can be generated at approximately the same level of accuracy in all pixels, however, it is also possible to evaluate the prediction image generation method while considering the reliability of a view synthesis.

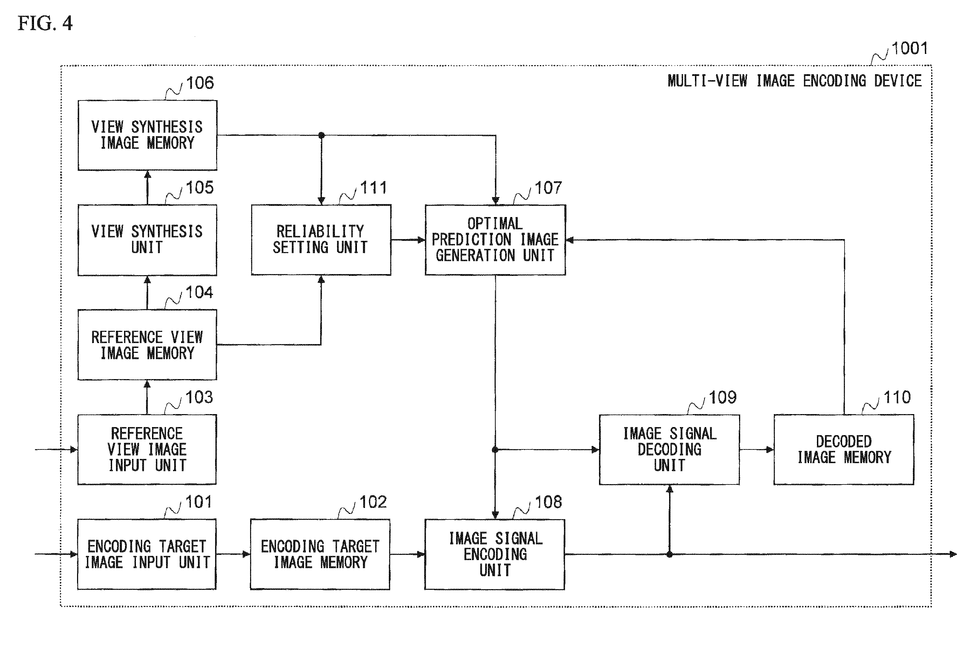

FIG. 4 is a block diagram of a multiview image encoding device that is used to decide a prediction image generation method using the reliability of view synthesis according to the first embodiment of the present invention. A multiview image encoding device 1001 shown in FIG. 4 differs from the multiview image encoding device 100 shown in FIG. 1 in that there is further provided a reliability setting unit 111 that calculates the reliability of synthesis on a view synthesis image and notifies the result to the optimal prediction image generation unit 107.

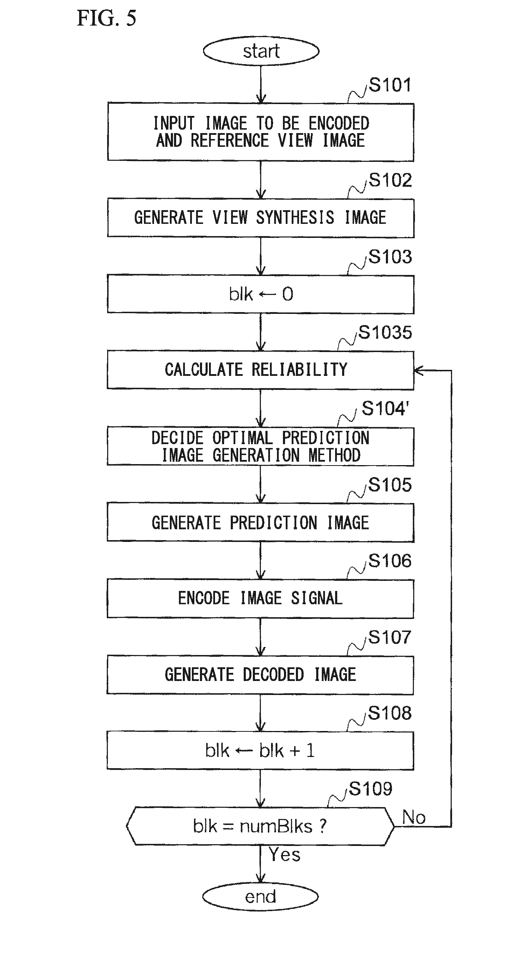

FIG. 5 shows a processing flow of the multiview image encoding device 1001 according to the first embodiment of the present invention. This differs from the processing flow of the multiview image encoding device 100 shown in FIG. 2 in that the reliability of a view synthesis image is calculated for each encoding processing block (step S1035), and then using this reliability and the view synthesis image 'Syn[blk]' for the block 'blk', an optimal prediction image generation method 'mode' is decided for that block 'blk' (step S104').

In the first embodiment, a reliability 'ρ' is a real number between 0 and 1, and may be expressed in any desired manner provided that it is defined as: the larger than 0 the value, the higher the reliability. For example, it may also be expressed as an 8 bit integer of 1 or more.

The reliability 'ρ' is may be in any form provided that, as has been described above, it is able to show how accurately the synthesis has been performed. For example, the most simple method is one in which the variances of pixel values of the pixels on a reference view frame to which each pixel of the view synthesis image corresponds are used. However, because the maximum value of the variance is unclear, it is necessary to normalize the dispersion values in the overall image such that the maximum value thereof is 1. If a pixel on each reference image used to synthesize the pixel on a view synthesis image, 'Syn [p]', is expressed as 'Ref$_n$ [p$_n$]', then the reliability 'ρ' can be expressed using the following Formula (7) or Formula (8).

$$\rho [p] = 1 - \mathrm{var1}(p)/\max_q (\mathrm{val1}(q)) \qquad \text{Formula (7)}$$

$$\rho [p] = 1 - \mathrm{var2}(p)/\max_q (\mathrm{val2}(q)) \qquad \text{Formula (8)}$$

Note that 'max' is a function that returns the maximum value for the given group, and the remaining functions can be expressed using the following Formula (9).

$$\mathrm{var1}(p) = \Sigma_n | \mathrm{Ref}_n [p_n] - \mathrm{ave}(p) |/N$$

$$\mathrm{var2}(p) = \Sigma_n (\mathrm{Ref}_n [p_n] - \mathrm{ave}(p))^2/N \qquad \text{Formula (9)}$$

$$\mathrm{ave}(p) = \Sigma_n \mathrm{Ref}_n [p_n] / N$$

In addition to the variance, a method may also be used in which the difference between the maximum value and the minimum value of a corresponding reference view pixel as expressed by the following Formula (10).

$$\rho\,[p] = 1 - \text{diff}\,(p) \,/\, \max_q\,(\text{diff}(q)) \qquad\qquad \text{Formula (10)}$$

$$\text{diff}\,(q) = \max_n\,(\text{Ref}_n\,[p_n]) - \min_n\,(\text{Ref}_n\,[p_n])$$

Note that 'min' is a function that returns the minimum value for the given group. These methods are simple, however, because they give no consideration to the occurrence of occlusion, they do not always provide the optimum reliability. Therefore, it is also possible to consider the occurrence of occlusion, and to cluster groups of corresponding pixels on a reference view image using their pixel values, and to use the variance values or the difference value between the maximum value and the minimum value for the pixel values of the pixels belonging to the largest cluster.

As another method, it is also possible to assume that differences between corresponding points among views follows a normal distribution or a Laplace distribution, and using an average value of the distribution and the variance value as parameters, to use the probabilities that correspond to the amount of the difference in each pixel that has been determined by means of the 'diff' and the like in the above-described Formula (10). As the distribution model, or the average or variance value thereof, , it is possible to use predetermined values, or to encode and then transmit these information. Generally, if a subject consists of perfect diffuse reflection surfaces, theoretically, the average value of the distribution can be set to 0.

Moreover, if it is assumed that the difference of pixel values between corresponding pixels is minimized around the depth value which gives the correspondence used on the generation of view synthesis image, where the perfect diffuse reflection of a subject is supposed, an error distribution model can be estimated from changes of difference when the depth is slightly changed, and then values that are based on this estimated error distribution model alone or on this estimated error distribution model and the pixel values of corresponding pixels on the reference view images used on the generation of view synthesis image are used There is also a method in which, as the values that are based on an error distribution model, the probability that an error in accordance with the estimated distribution model will be within a fixed range is used. There is also a method in which, as the values that are based on an error distribution model and on the pixel values of corresponding pixels on reference view images used on the generation of view synthesis image, if the error occurrence probability is assumed to follow the estimated distribution model, the probability that a situation represented by the pixel values of corresponding pixels on the reference view frames used for the generation of the view synthesis image will occur is used.

Yet another method is one in which, if a technique known as 'Belief Propagation' (see Non-patent document 6) is used for estimating the depth or disparity that is necessary on the view synthesis, because a probability distribution is obtained for the disparity or depth in each pixel, it is also possible for this information to be used as a reliability value. The information obtained by using techniques other than Belief Propagation may also be used provided that these techniques make it possible to calculate the reliability of view synthesis for each pixel of a view synthesis image.

If a corresponding point search, or a stereo method, or depth estimation are performed as a part of view synthesis, a portion of these processes is the same as a portion of the reliability calculation. In such cases, by performing the generation of the view synthesis image and the reliability calculation simultaneously, it is possible to reduce the amount of mathematical operations.

In the processing to decide the prediction image generation method 'mode' for the block 'blk' (step S104') using this reliability and the view synthesis image 'Syn[blk]' for the block 'blk', instead of the above-described Formula (1) through Formula (3), the evaluation value 'cost' is defined using the following Formula (11) through Formula (13) and the minimization processing expressed by Formula (5) is performed.

$$\text{cost}\,(m) = \Sigma_p\,\rho\,(p) \cdot |\text{Syn}\,[p] - \text{Pred}_m\,[p]| \qquad\qquad \text{Formula (11)}$$

$$\text{cost}\,(m) = \Sigma_p\,\rho\,(p) \cdot (\text{Syn}\,[p] - \text{Pred}_m\,[p])^2 \qquad\qquad \text{Formula (12)}$$

Here, 'cost' is the evaluation value, 'm' is an index value showing the method used to generate the intra prediction image, and 'Pred$_m$' shows the prediction image candidates that are generated in accordance with the method 'm' from decoded images adjacent to the block 'blk' that are stored in the decoded image memory 110. In addition to these methods, there is another method in which a value obtained by converting differential values between a view synthesis image and prediction image candidates using DCT or a Hadamard transformation or the like is used. If this conversion is expressed as a matrix A, then it can be expressed using the following Formula (13) . Note that // X // expresses the norm of X, the operator · expresses the matrix product, and the operator * expresses multiplication for each element.

$$\text{cost (m)} = \| \; \rho \, [\text{blk}] * A \cdot (\text{Syn} \, [\text{blk}] - \text{Pred}_m \, [\text{blk}]) \; \| \; \text{Formula (13)}$$

In the first embodiment, when the prediction image generation method is being decided, the evaluation is performed using pixels that have already been encoded, that are adjacent to the block 'blk', and that are stored in the decoded image memory 110, however, it is also possible to perform the evaluation using only the view synthesis image without using the decoded image.

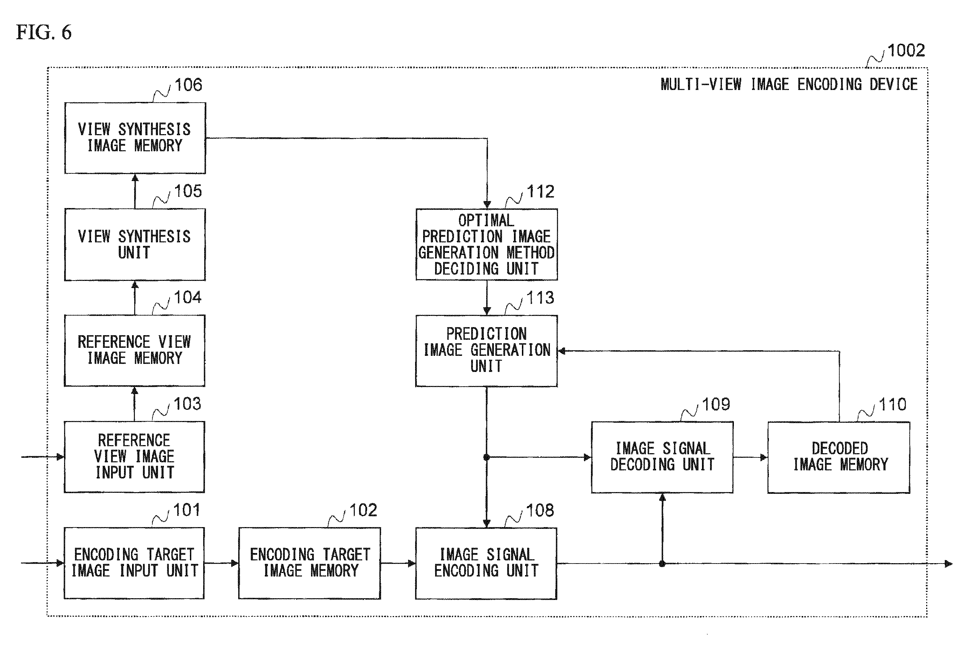

FIG. 6 is a block diagram of a multiview image encoding device that is used to decide a prediction image generation method from only the view synthesis image according to the first embodiment of the present invention. A multiview image encoding device 1002 shown in FIG. 6 differs from the multiview image encoding device 100 shown in FIG. 1 in that the optimal prediction image generation unit 107 is divided into an optimal prediction image generation method deciding unit 112 and a prediction image generation unit 113.

The optimal prediction image generation method deciding unit 112 decides a single optimum method for generating a prediction image for the block 'blk' from among predetermined prediction image generation methods using only a view synthesis image. The prediction image generation unit 113 generates a prediction image in accordance with a supplied prediction image generation method using decoded images for areas adjacent to the block 'blk' that are stored in the decoded image memory 110.

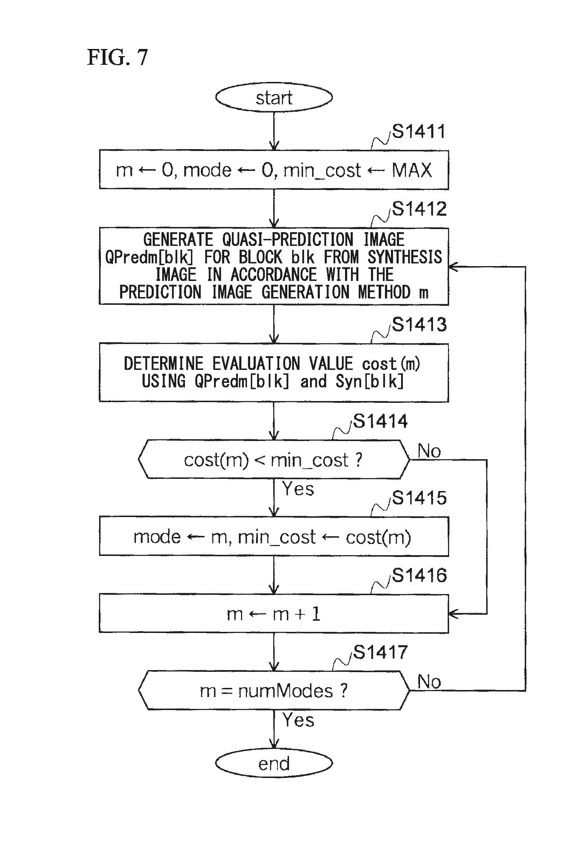

The processing flow of the multiview image encoding device 1002 is the same as the flow of the processing performed by the multiview image encoding device 100 shown in FIG. 2, however, it differs therefrom in the detailed processing of step S104. FIG. 7 shows the detailed flow of the processing performed by the optimal prediction image generation method deciding section 112 in step S104 according to the first embodiment of the present invention.

In the optimal prediction image generation method deciding unit 112, a prediction image generation method is decided by determining an evaluation value for each prediction image generation method, and then comparing these evaluation values. Namely, with the prediction image generation method index 'm' set to 0, a variable 'mode' in which the prediction image generation method having the best evaluation value from among the prediction image generation methods that have been evaluated is recorded also set to 0, and an evaluation value 'min_cost' in the prediction image ganeration method 'mode' set to the maximum value 'MAX' that can never be obtained, these are all initialized (step S1411), and then while 'm' is increased by 1 (step S 1416), the following processing (step S1412 to step S1415) is repeated until 'm' reaches 'numModes' which shows the number of prediction image generation methods (step S 1417). Note that, here, a case is shown in which the smaller the evaluation value, the better the prediction image generation method.

In the processing that is repeated for each prediction image generation method, firstly, in accordance with the prediction image generation method that is shown by 'm', a quasi- prediction image 'QPred$_m$ [blk] ' is generated (step S 1412) using view synthesis images adjacent to the block 'blk'. Note that the difference between this step and step S 1402 shown in FIG. 3 is that an image is generated using view synthesis images instead of decoded images.

Once a quasi-prediction image has been generated, the evaluation value 'cost (m)' is determined (step S 1413) by comparing the quasi-prediction image with the view synthesis image. The processing performed here is the same as the processing of step S1403 in FIG. 3 except that 'Pred$_m$' has been replaced with 'QPred$_m$'. Namely, for this calculation of the evaluation value, any desired formula such as the above-described Formula (1) to Formula (4) and the like with 'Pred$_m$' replaced with 'QPred$_m$' may be used provided that the formula is the same on the decoding side.

Once the evaluation value has been determined, a check is made as to whether or not that value is smaller than 'min_cost' (step S1414), and if it is smaller, 'mode' is rewritten with 'm', and 'min_cost' is rewritten with 'cost (m)' (step S1415), and the routine moves to the next prediction image generation method. If the value is equal to or more than 'min_cost', then the routine moves without any further action being taken to the next prediction image generation method. Note that 'mode' when the processing finally arrives at 'end' becomes the prediction image generation method for the block 'blk'.

The prediction image generation unit 113 generates a prediction image "Pred' in accordance with this 'mode' using decoded images of areas that are adjacent to the block 'blk' that have been stored in the decoded image memory 110. Note that because a view synthesis image is used for the images generated during the evaluation of the prediction image generation methods, unlike the multiview image encoding device 100 shown in FIG. 1, here, it is absolutely necessary for prediction image generation processing to be performed.

If view synthesis images alone are used in this manner whenever a prediction image generation method is evaluated, the advantage is obtained that parallel processing becomes possible. In the multiview image encoding device 100 shown in FIG. 1, it is necessary to generate the decoded image adjacent to the block 'blk' in order to decide the prediction image generation method for the block 'blk'. Namely, in order to decide the prediction image generation method for the block 'blk', it has been necessary to wait for the processing to encode areas adjacent to the block 'blk' to be completed. However, in the multiview image encoding device 1002 according to the first embodiment, because the prediction image generation method for the block 'blk' is decided only from view synthesis images, it becomes possible to decide the prediction image generation method independently from the encoding processing for each block.

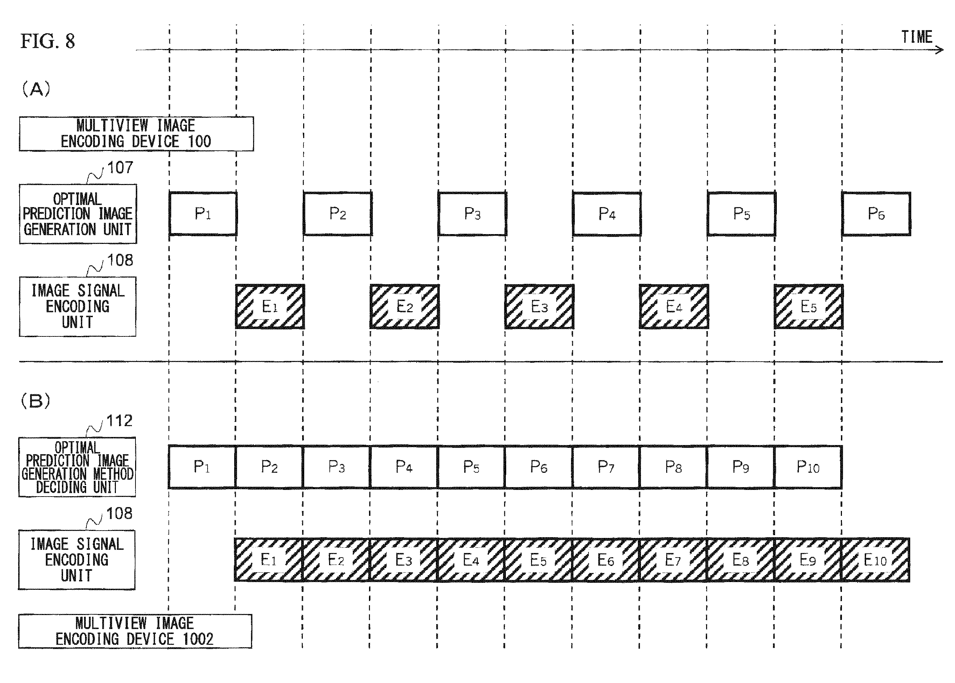

Namely, if the processing to decide the prediction image generation method for the block 'blk' is expressed as '$P_{blk}$', and the processing to encode the image signal thereof is expressed as '$E_{blk}$', and if it is assumed that the blocks are encoded in a raster scanning sequence, then the multiview image encoding device 100 must perform these processing alternatingly as is shown in FIG. 8 (A) . In contrast, in the multiview image encoding device 1002, as is shown in FIG. 8 (B), it is possible for the respective processing to be performed independently, so that the processing time can be considerably curtailed.

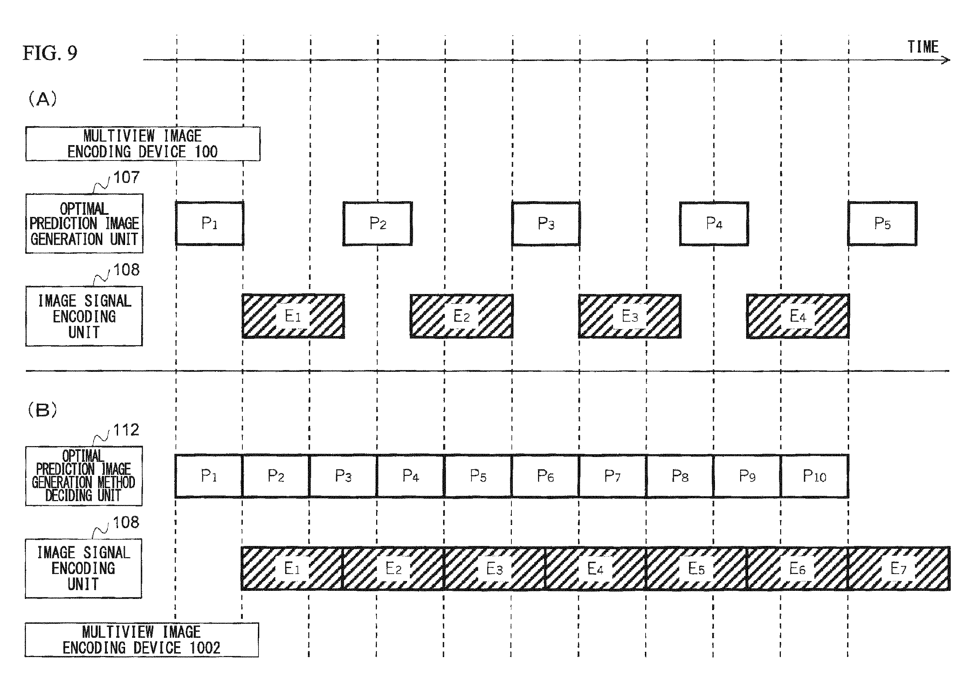

FIG. 8 shows a case in which the processing times for deciding the prediction image generation method according to the first embodiment of the present invention and for encoding the image signal thereof are the same, however, even if the processing times of these two are not the same, it is still possible to reduce the processing time. FIG. 9 shows a case in which the processing time for the encoding processing is longer than the processing time for deciding the prediction image generation method according to the first embodiment of the present invention. A case in which complex binarization or arithmetical encoding is performed in the encoding processing corresponds to the example shown in FIG. 9. In this case, the encoding processing can be performed without any wait time being necessary.

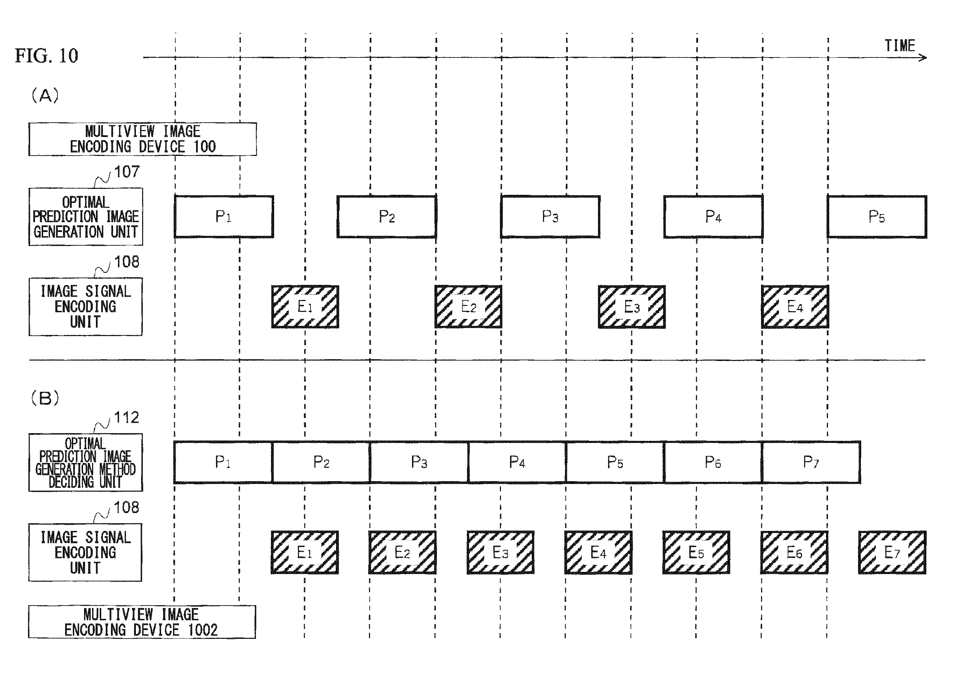

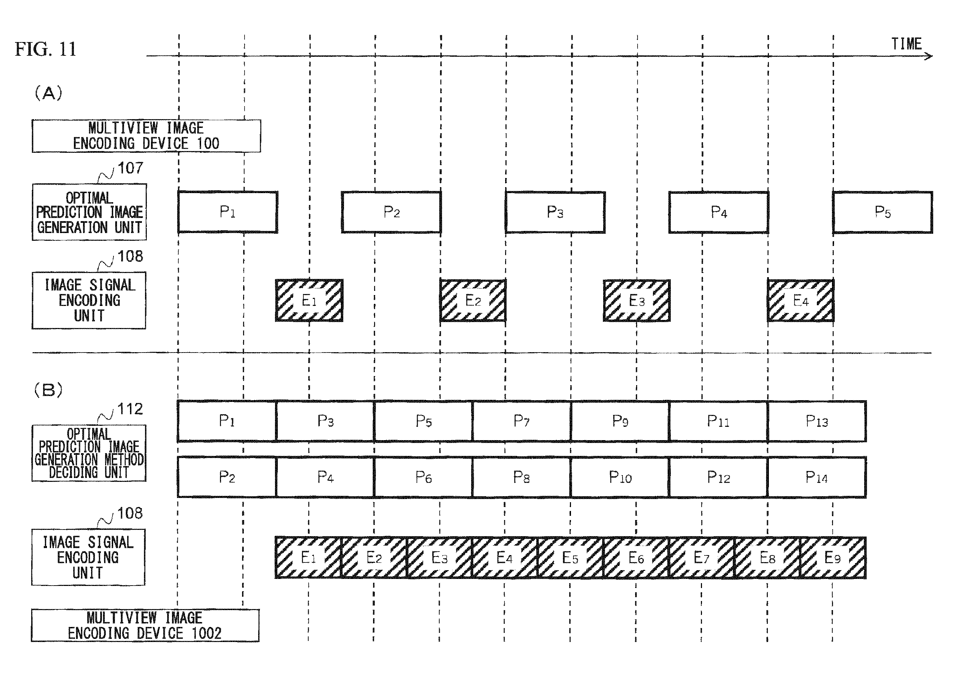

FIG. 10 shows a case in which the processing time for deciding the prediction image generation method is longer than the processing time for the encoding processing according to the first embodiment of the present invention. This case corresponds to cases such as when there are an extremely large number of prediction image generation methods. In this case, the encoding processing must wait for the prediction image generation method to be decided, however, because the processing to decide the prediction image generation method for the next block can be performed at the same time as the encoding processing is being performed, the processing time can be shortened. Moreover, because the processing to decide the prediction image generation method is performed independently for each block, it is also possible for the encoding processing to be performed without any wait time by performing multiple processing sequences for deciding the prediction image generation method for each block in parallel with each other. FIG. 11 shows a case in which two processing sequences for deciding the prediction image generation method according to the first embodiment of the present invention are performed simultaneously.

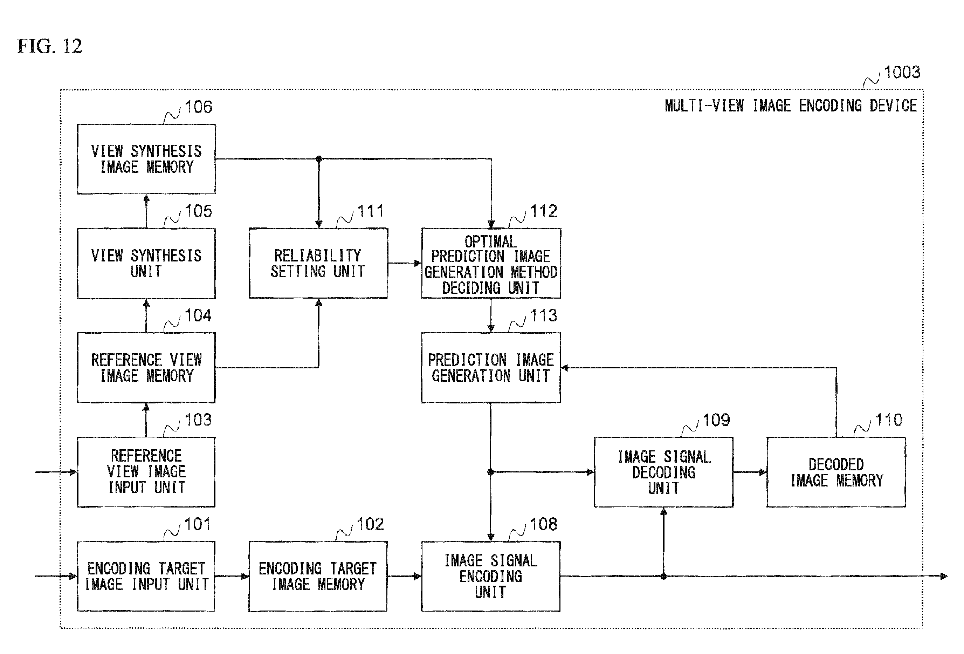

In the multiview image encoding device 1002 as well, it is possible to set a more appropriate prediction image generation method by considering the reliability of the view synthesis processing. The multiview image encoding device employed in this case is shown in FIG. 12. In a multiview image encoding device 1003 shown in FIG. 12, a reliability setting unit 111 has been added to the multiview image encoding device 1002 shown in FIG. 6. The reliability setting unit 111 calculates the reliability of synthesis on a view synthesis image, and notifies the result of this calculation to the optimal prediction image generation method deciding section 112. The processing performed by this reliability setting unit 111 is the same as the processing performed by the reliability setting unit 111 described for the multiview image encoding device 1001 shown in FIG. 4.

[Second embodiment: Multiview image encoding device]

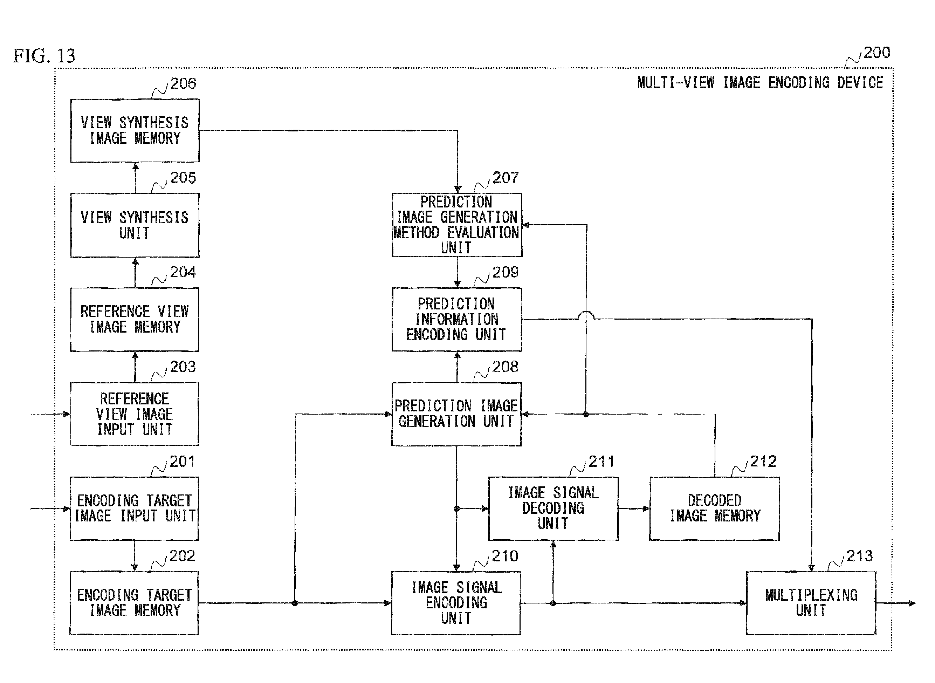

Next, a second embodiment of the present invention will be described. FIG. 13 is a block diagram showing the structure of a multiview image encoding device according to a second embodiment of the present invention. As is shown in FIG. 13, a multiview image encoding device 200 is provided with an encoding target image input unit 201, an encoding target image memory 202, a reference view image input unit 203, reference view image memory 204, a view synthesis unit 205, view synthesis image memory 206, a prediction image generation method evaluation unit 207, a prediction image generation unit 208, a prediction information encoding unit 209, an image signal encoding unit 210, an image signal decoding unit 211, decoded image memory 212, and a multiplexing unit 213.

The encoding target image input unit 201 receives inputs of images of an encoding target view. The encoding target image memory 202 stores the encoding target images. The reference view image input unit 203 receives inputs of reference view images. The reference view image memory 204 stores the reference view images. The view synthesis unit 205 synthesizes images of the encoding target view using the reference view images. The view synthesis image memory 206 stores the view synthesis images.

The prediction image generation method evaluation unit 207 estimates methods of generating a prediction image of an encoding target area from decoded images of areas adjacent to the encoding target area using view synthesis images of the encoding target area. The prediction image generation unit 208 decides the method to generate a prediction image of an encoding target area from decoded images of areas adjacent to the encoding target area using the encoding target images of the encoding target area, and then generates a prediction image. The prediction information encoding unit 209 encodes information that is used to express the method for generating the prediction image from the prediction image generation method and the estimated value thereof. Hereinafter, this encoded information is referred to as 'prediction information'.

The image signal encoding unit 210 performs predictive encoding on encoding target images using the generated prediction images. The image signal decoding unit 211 uses the generated prediction images to decode the generated code data so as to generate a decoded image. The decoded image memory 212 stores the decoded images. The multiplexing unit 213 multiplexes the code data for the prediction information with the code data for the image signal, and then outputs the result.

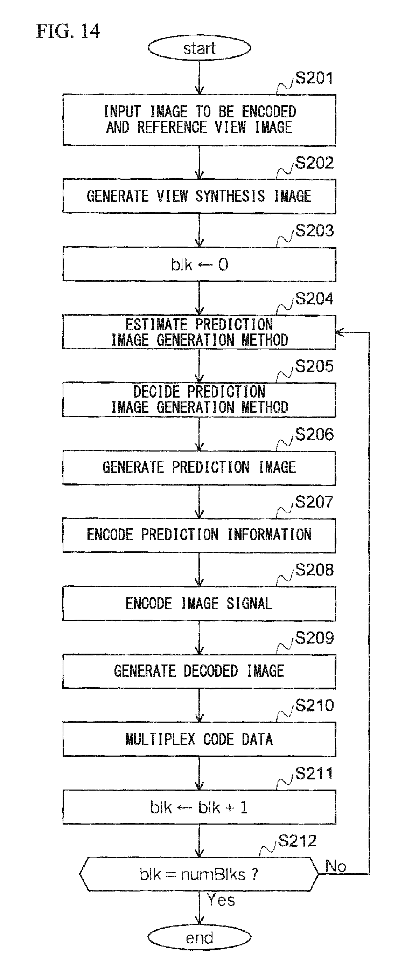

FIG. 14 is a flowchart illustrating operations of the multiview image encoding device 200 according to the second embodiment of the present invention. The processing executed by this multiview image encoding device 200 will be described in detail in accordance with this flowchart.

Firstly, an encoding target image 'Org' is input by the encoding target image input unit 201, and is stored in the encoding target image memory 202. Reference view images 'Ref$_n$' (wherein n = 1, 2, ..., N) that were photographed from reference viewpoints at the same time as the encoding target image 'Org' are then input by the reference view image input unit 203, and is stored in the reference view image memory 204 (step S201) . The reference view images that are input here are obtained by decoding an image that has already been encoded. The reason for this is that, by using information that is absolutely identical to information obtained by the decoding device, it is possible to suppress the occurrence of coding artifacts such as drift and the like. However, if this type of coding artifact is to be permitted to occur, then it is also possible for an original image that has not yet been encoded to be input. Note that 'n' is an index showing the reference view, while 'N' is the number of reference views that can be used.

Next, in the view synthesis unit 205, an image photographed at the same viewpoint and at the same time as the encoding target image is synthesized using the image signal of the reference view images, and the generated synthesis view image 'Syn' is stored in the view synthesis image memory 206 (step S202) . The processing performed here is the same as that performed in step S102 of the first embodiment.

Once the view synthesis image has been generated, the encoding target image is divided, and a prediction image is generated for each of the divided areas. An image signal of the encoding target image is then encoded (steps S203 through S212). Namely, if the block index to be encoded is expressed as 'blk', and the total number of blocks to be encoded is expressed as 'numBlks', then after 'blk' has been initialized as 0 (i.e., step S203), the following processing (i.e., step S204 through step S210) is repeated while 1 is added to 'blk' (step S211) until 'blk' reaches 'numBlks' (step S212).

Note that provided that it is possible to generate the above-described view synthesis image for each block, then it is possible to also generate the view synthesis image as a part of the processing that is repeated for each block to be encoded. For example, if depth information is provided for the encoding target image, then it is possible to generate a view synthesis image for each block.

In the processing that is repeated for each block to be encoded, firstly, an estimated value 'pmode' for a prediction image generation method is calculated by the prediction image generation method evaluation unit 207 for the block 'blk' (step S204) using the view synthesis image 'Syn[blk]' for that block 'blk'. The processing that is performed here is the same as the processing performed in step S104 of the first embodiment.

Next, a prediction image generation method 'mode' is decided by the prediction image generation unit 208 for the block 'blk' (step S205) using an encoding target image 'Org [blk] ' for that block 'blk', and a prediction image 'Pred [blk] ' is generated for the block 'blk' (step S206) using decoded images of areas adjacent to the block 'blk' that are stored in the decoded image memory 212.

The processing to decide the prediction image generation method for the block 'blk' is processing to determine an intra prediction method which provides the maximum suitability or the minimum divergence from among a predefined group of prediction methods with the encoding target image 'Org[blk]' being regarded as a target image. Namely, the processing performed here is the same as the processing performed in step S104 of the first embodiment except that the encoding target image 'Org[blk]' is used instead of the view synthesis image 'Syn[blk]'. However, if an 'RD cost' is used as the evaluation value, then the amount of code required for the prediction information must also be considered. If the estimated value for the prediction image generation method is expressed as 'pmode', and the amount of code required for the prediction information with the prediction image generation method is 'm' is expressed as 'O(pmode, m) ', then an evaluation value that uses an 'RD cost' is expressed by the following Formula (14). Note that 'D' and 'R' are the same as in Formula (4).

$$\text{cost (m) = D (m) + } \lambda \text{ \{R (m) + O (pmode, m)\}} \qquad \text{Formula (14)}$$

The processing to generate the prediction image 'Pred[blk]' for the block 'blk' is the same as that performed in step S105 of the first embodiment. Note that, in the same way, when each of the prediction image generation methods are being evaluated in step S205, it is also possible to store the prediction image candidates having the smallest evaluation values, and then to set the stored prediction image candidates as the prediction image without generating a prediction image for the prediction method 'mode' that was obtained in step S206.

Next, prediction information is encoded by the prediction information encoding section 209 from the obtained prediction image generation method 'mode' and the estimated value 'pmode' thereof (step S207) . Here, if 'pmode' and 'mode' are equal, then a bit flag showing that the prediction is correct is encoded, while if they are not equal, a bit flag showing that the prediction is not correct and information that shows the prediction image generation method are encoded.

The bit flag is 1-bit binary information and, for example, 1 can be used if the prediction is correct, while 0 can be used if the prediction is not correct. The information showing the prediction image generation method may be expressed using a fixed table, or may be expressed using a different table for each 'mode'. For example, if the prediction image generation method is information showing the orientation of the prediction, then a table in which the code length becomes shorter as it approaches the orientation indicated by the 'pmode' can be prepared. However, if a different table is used for each 'mode', then it becomes necessary to create a 'pmode' in all of the blocks on the decoding side, so that the amount of calculation that must be performed in the decoding processing increases. Moreover, if 'pmode' and 'mode' are different, then, as in H.264/AVC, it is also possible to create a second prediction value using the prediction image generation method used in adjacent blocks, and to encode a bit flag that shows whether or not this second prediction value is correct. Note that it is also possible to perform the encoding using arithmetical encoding after the prediction image generation method has been binarized using a table or the like. In this case, as in H.264/AVC, it is also possible to create contexts that match the situation in adjacent blocks, and to perform the encoding while controlling the probability of the occurrence of 0 or 1 in each of these contexts.

Next, the image signal 'Org [blk] ' is predictively encoded for the block 'blk' by the image signal encoding unit 210 (step S208) . Any suitable method can be used for this encoding. In general encoding method such as MPEG- 2 or H. 264/AVC, encoding is performed by applying a transformation such as DCT, quantization, binarization, and entropy encoding on a differential signal (Org [blk]- Pred [blk] ) between the image signal and the prediction image of the block 'blk'. Note that the processing performed here is the same as that performed in step S106 of the first embodiment.

Next, in the image signal decoding unit 211, using the code data obtained as the result of the encoding and also the prediction image, an image signal is decoded for the block 'blk', and a decoded image 'Dec [blk] ', which is the result of the decoding, is stored in the decoded image memory 212 (step S209) . Here, a method that corresponds to the method used for the encoding is used. For example, if general encoding method such as MPEG- 2 or H. 264/AVC is employed, the coded data subjected to entropy decoding, inverse binarization, inverse quantization, and inverse transformation such as IDCT. A prediction signal is then added to the two- dimensional signal that is obtained as a result, and, finally, the image signal is decoded by performing clipping within the range of the pixel values. The decoded image signal is used to generate a prediction signal that is used for encoding other blocks. Note that the processing performed here is the same as that performed in step S107 of the first embodiment.

Lastly, in the multiplexing unit 213, the code data for the prediction information and the code data for the image signal are multiplexed and output (step S210) . Note that, here, the multiplexing may be performed for each block, however, it is also possible to perform the multiplexing after all of the blocks have been processed. However, in this case, not only is it necessary to perform the multiplexing after the code data has been buffered, but depending on the multiplexing method, it may be necessary to perform inverse multiplexing on the decoding side as well after all of the code data has been received.

In the second embodiment, it is assumed that view synthesis images can be generated at approximately the same level of accuracy in all pixels, however, it is also possible to evaluate the prediction image generation method while considering the reliability of view synthesis.

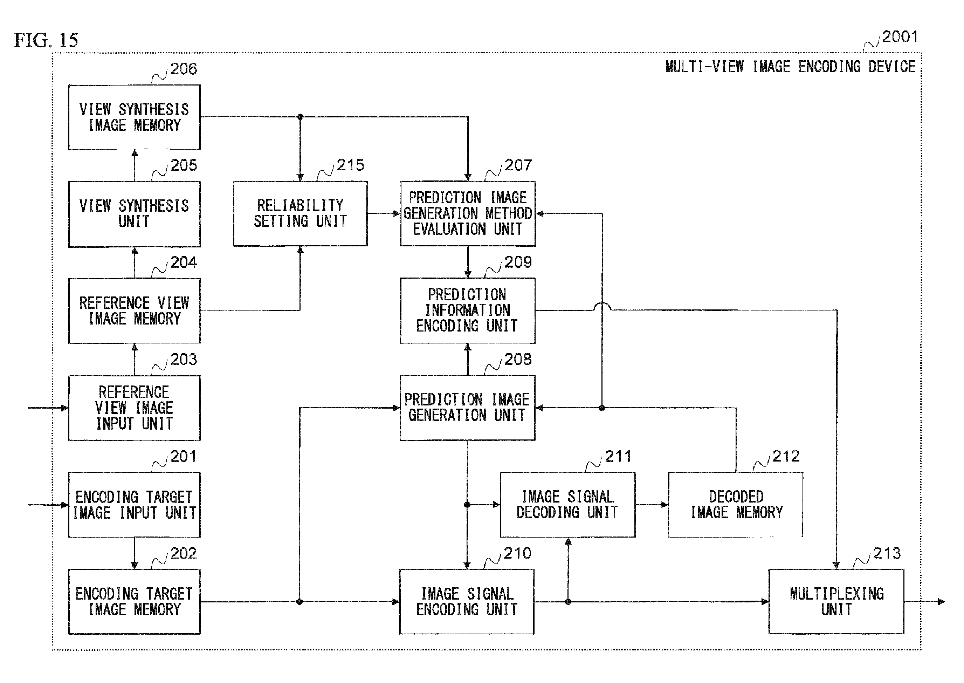

FIG. 15 is a block diagram of a multiview image encoding device that is used to decide a prediction image generation method using the reliability of view synthesis according to the second embodiment of the present invention. A multiview image encoding device 2001 shown in FIG. 15 differs from the multiview image encoding device 200 shown in FIG. 13 in that there is further provided a reliability setting unit 215 that calculates the reliability of performing synthesis on a view synthesis image and notifies the result to the prediction image generation method evaluation unit 207.

If reliability is used, then when the prediction image generation method is being estimated in step S204, firstly, the reliability of the view synthesis image for the block 'blk' is calculated and, using this reliability as well as the view synthesis image 'Syn[blk]' for the block 'blk', an estimated value 'pmode' of the prediction image generation method is created for the block 'blk'. The processing to calculate this reliability is the same as that of step S1035 of the first embodiment, and the processing to generate an estimated value using the reliability is the same as that of step S104' of the first embodiment other than that the generated value forms an estimated value for the prediction image generation method.

In the second embodiment, when the prediction image generation method is being estimated, the evaluation is performed using pixels that have already been encoded, that are adjacent to the block 'blk', and that are stored in the decoded image memory 212, however, it is also possible to perform the evaluation using only the view synthesis image without using the decoded image.

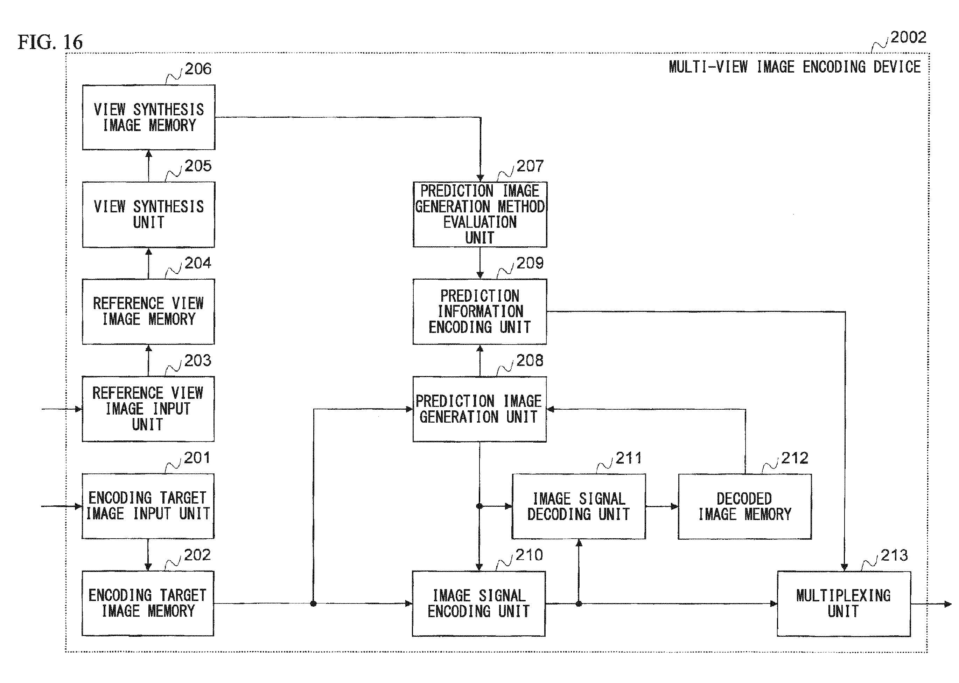

FIG. 16 is a block diagram of a multiview image encoding device that is used to decide a prediction image generation method from only the view synthesis image according to the second embodiment of the present invention. A multiview image encoding device 2002 shown in FIG. 16 differs from the multiview image encoding device 200 shown in FIG. 13 in that only a view synthesis image is an input into the prediction image generation method evaluation section 207.

The processing to estimate a prediction image generation method (step S204) in this case is the same as the processing shown in the processing flow described in the FIG. 7 of the first embodiment. However, instead of the prediction image generation method 'mode', an estimated value 'pmode' of the prediction image generation method is determined.

If only a view synthesis image is used when evaluating a prediction image generation method in this manner, the advantage is obtained that parallel processing becomes possible. In the multiview image encoding device 200, in order to decide the prediction image generation method for the block 'blk', it is necessary to generate the decoded images adjacent to the block 'blk'. Namely, in order to decide the prediction image generation method for the block 'blk', it is necessary to wait for the completion of the encoding processing in areas peripheral to the block 'blk'. However, in the multiview image encoding device 2002, because the prediction image generation method for the block 'blk' is decided only from the view synthesis image, it is possible to decide the prediction image generation method independently from the encoding processing of each block.

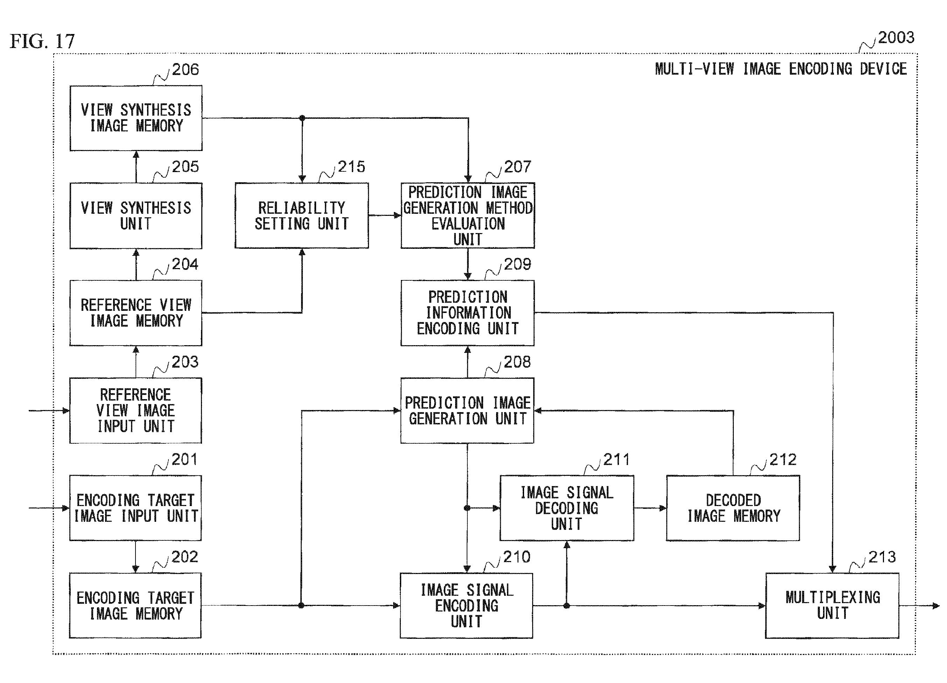

In the multiview image encoding device 2002 as well, it is possible to set a more appropriate prediction image generation method while considering the reliability of view synthesis processing. The device structure in this case takes the form of the multiview image encoding device 2003 shown in FIG. 17.

[Third embodiment: Multiview image decoding device]

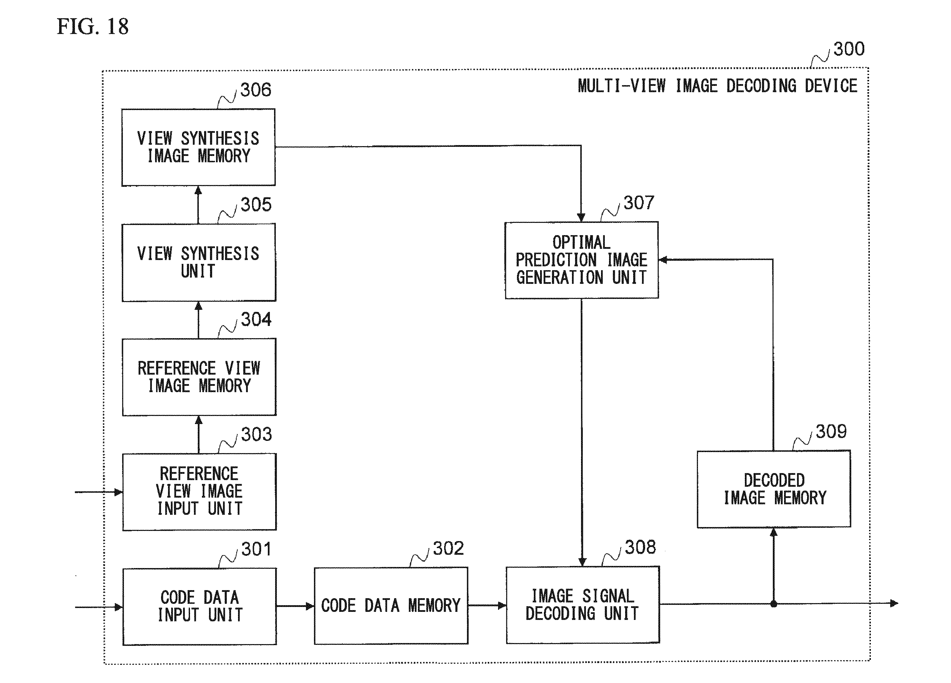

Next, a third embodiment of the present invention will be described. FIG. 18 is a block diagram showing the structure of a multiview image decoding device according to a third embodiment of the present invention. As is shown in FIG. 18, a multiview image decoding device 300 is provided with a code data input unit 301, a code data memory 302, a reference view image input unit 303, a reference view image memory 304, a view synthesis unit 305, a view synthesis image memory 306, an optimal prediction image generation unit 307, an image signal decoding unit 308, and a decoded image memory 309.

The code data input unit 301 receives inputs of code data for images of view that is to be decoded. Hereinafter, the view that is to be decoded will be referred to as 'decoding target view', and decoded images thereof will be referred to as 'decoding target images'. The code data memory 302 stores the input code data.

The reference view image input unit 303 receives inputs of images that are obtained by photographing the same subject at the same time from a different view from the decoding target view. Hereinafter, this different view from the decoding target view will be referred to as a reference view, and an image thereof will be referred to as a reference view image. The reference view image memory 304 stores the reference view images that are input. The view synthesis unit 305 synthesizes images of the decoding target view using the reference view images. Hereinafter, the synthesized images will be referred to as view synthesis images. The view synthesis image memory 306 stores the view synthesis images that are created.

The optimal prediction image generation unit 307 generates prediction images of a decoding target area from decoded images of areas adjacent to the decoding target area using view synthesis images of the decoding target area. The image signal decoding unit 308 decodes a decoded image from the input coda data using the prediction images. The decoded image memory 309 stores the decoded images.

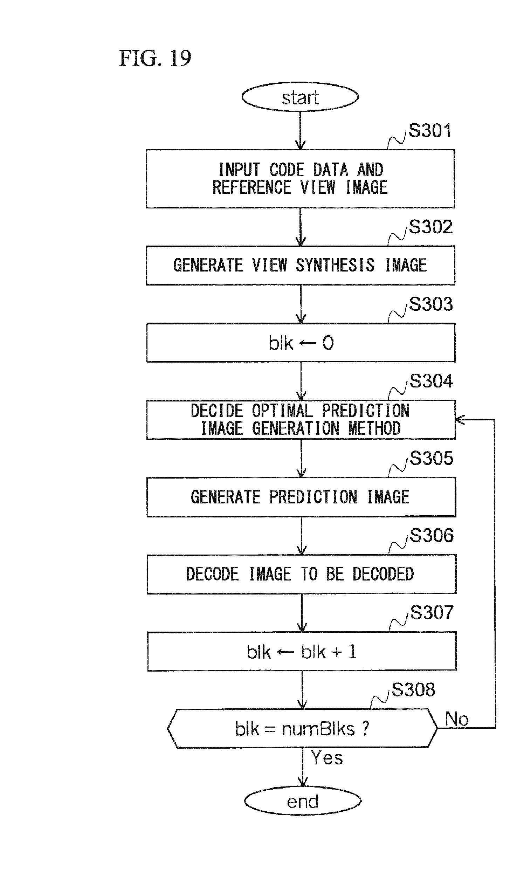

FIG. 19 is a flowchart illustrating operations of the multiview image decoding device 300 according to the third embodiment of the present invention. The processing executed by this multiview image decoding device 300 will be described in detail in accordance with this flowchart.

Firstly, code data for a decoding target image is input by the code data input unit 301, and is stored in the code data memory 302. Reference view images 'Ref$_n$' (wherein n = 1, 2, ..., N) that were photographed from reference viewpoints at the same time as the decoding target image is then input by the reference view image input unit 303, and is stored in the reference view image memory 304 (step S301). The reference view images that are input here are the same ones that were used on the encoding side. The reason for this is that, by using the same information, it is possible to avoid the occurrence of coding artifacts such as drift and the like. However, if this type of coding artifacts is to be permitted to occur, then it is also possible for a reference view image that is different from that on the encoding side to be input. Note that 'n' is an index showing the reference view, while 'N' is the number of reference views that can be used.

Next, in the view synthesis unit 305, an image photographed at the same viewpoint and at the same time as the decoding target image is synthesized using the image signal of the reference view images, and the synthesis view image 'Syn' is stored in the view synthesis image memory 306 (step S302). This processing is the same as the processing of step S102 of the first embodiment. Note that if camera parameters that show the positional relationship of the cameras and the projection process employed by the cameras, and that are required for the view synthesis processing are encoded, then these need to be decoded in advance.

Once the view synthesis image has been generated, the decoding target image is divided, and a prediction image is generated for each of the divided areas. An image signal of the decoding target image is then decoded from the code data (steps S303 through S308). Namely, if the block index to be decoded is expressed as 'blk', and the total number of blocks to be decoded is expressed as 'numBlks', then after 'blk' has been initialized as 0 (i.e., step S303), the following processing (i.e., step S304 through step S306) is repeated while 1 is added to 'blk' (step S307) until 'blk' reaches 'numBlks' (step S308).

Note that, provided that it is possible to generate the above-described view synthesis image for each block, then it is possible to also generate the view synthesis image as a part of the processing that is repeated for each block to be decoded. For example, if depth information is provided for the decoding target image, then it is possible to generate a view synthesis image for each block.

In the processing that is repeated for each block to be decoded, firstly, a prediction image generation method 'mode' is decided by the optimal prediction image generation unit 307 for the block 'blk' (step S304) using the view synthesis image 'Syn[blk]' for that block 'blk', and a prediction image 'Pred[blk]' is generated for the block 'blk' (step S305) using decoded images for areas adjacent to the block 'blk' that are stored in the decoded image memory 309. The processing performed here is the same as that of step S104 and step S105 of the first embodiment.

Once a prediction image has been obtained, the image signal is decoded for the block 'blk' by the image signal decoding unit 308 using the code data and the prediction image (step S306). Here, a method that corresponds to the method used for the encoding is used. For example, if general encoding method such as MPEG-2 or H.264/AVC is used, the code data is subjected to entropy decoding, inverse binarization, inverse quantization, and inverse transformation such as IDCT and the like. A prediction signal is then added to the two-dimensional signal that is obtained as a result, and, finally, the image signal is decoded by performing clipping within the range of the pixel values. The decoded image 'Dec[blk]' obtained as a result of this decoding forms the output from the multiview image decoding device 300, and is also stored in the decoded image memory 309 in order to generate prediction images for other blocks.

In the third embodiment, it is assumed that view synthesis images can be generated at approximately the same level of accuracy in all pixels, however, it is also possible to evaluate the prediction image generation method while considering the reliability of a view synthesis. However, the result of the consideration of the reliability of view synthesis must be the same on both the encoding side and the decoding side. This is in order to prevent the occurrence of coding artifacts such as drift and the like.

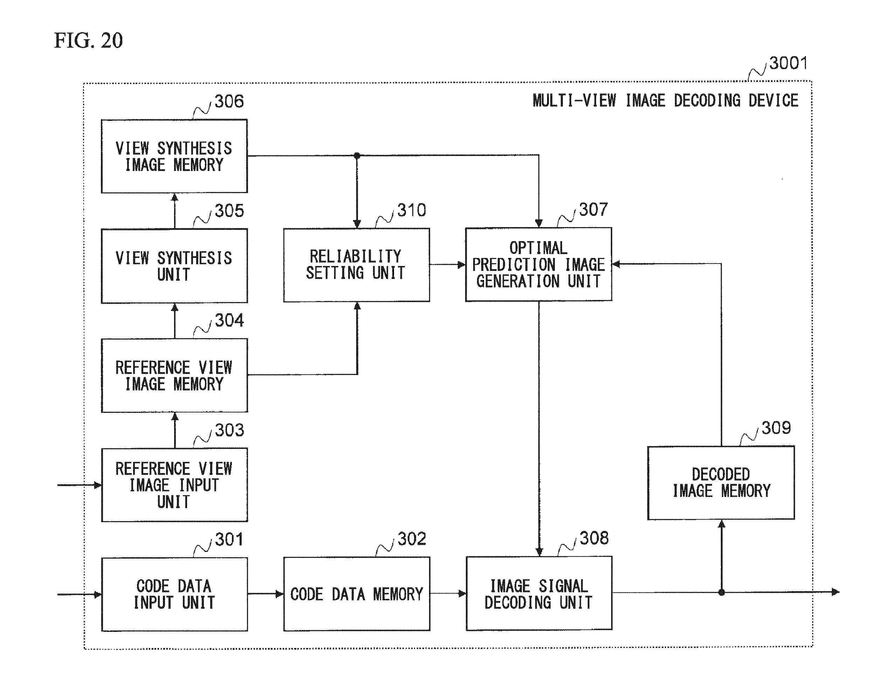

FIG. 20 is a block diagram of a multiview image decoding device that is used to decide a prediction image generation method using the reliability of view synthesis according to the third embodiment of the present invention. A multiview image decoding device 3001 shown in FIG. 20 differs from the multiview image decoding device 300 shown in FIG. 18 in that there is further provided a reliability setting unit 310 that calculates the reliability of performing synthesis on a view synthesis image and notifies the result to the optimal prediction image generation unit 307.

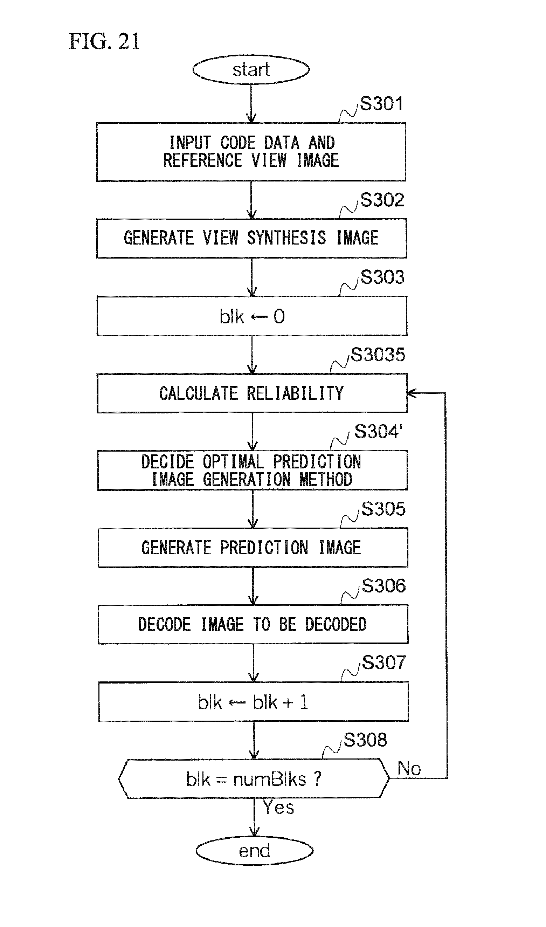

FIG. 21 shows a processing flow of the multiview image decoding device 3001 according to the third embodiment of the present invention. This differs from the processing flow of the multiview image decoding device 300 shown in FIG. 19 in that the reliability of a view synthesis image is calculated for each decoding processing block (step S3035), and then using this reliability and the view synthesis image 'Syn[blk]' for the block 'blk', a prediction image generation method 'mode' is decided for that block 'blk' (step S304'). The respective processing performed here is the same as that of steps S1025 and S104' of the first embodiment.

The reliability can be defined in any desired way provided that it is able to show how accurately the synthesis was performed, such as in the manner described in the first embodiment and the like. However, the same definition must be used on both the encoding side and the decoding side. This is in order to avoid the occurrence of coding artifacts such as drift and the like.

In the third embodiment, when the prediction image generation method is being decided, the evaluation is performed using pixels that have already been encoded that are adjacent to the block 'blk' and that are stored in the decoded image memory 309, however, it is also possible to perform the evaluation using only the view synthesis image without using the decoded image.

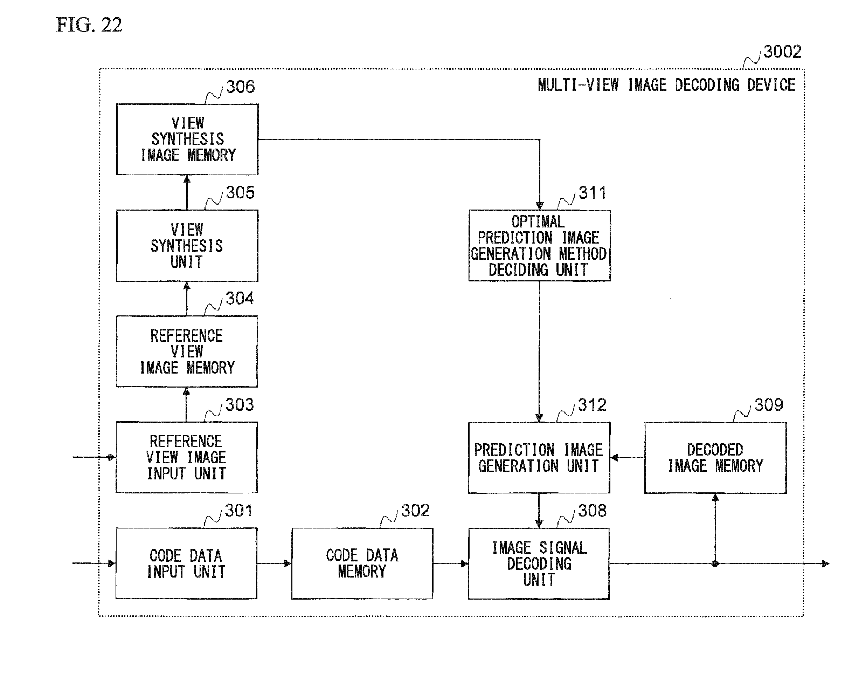

FIG. 22 is a block diagram of a multiview image decoding device that is used to decide a prediction image generation method from only the view synthesis image according to the third embodiment of the present invention. A multiview image decoding device 3002 shown in FIG. 22 differs from the multiview image decoding device 300 shown in FIG. 18 in that the optimal prediction image generation unit 307 is divided into an optimal prediction image generation method deciding unit 311 and a prediction image generation unit 312.

The optimal prediction image generation method deciding unit 311 has functional portions that include a prediction image candidate generation unit and a prediction image evaluation unit and, using only view synthesis images, decides a single method that is suitable for generating a prediction image for the block 'blk' from among predetermined prediction image generation methods. The prediction image generation unit 312 generates a prediction image in accordance with the supplied prediction image generation method using decoded images for areas adjacent to the block 'blk' that are stored in the decoded image memory 309.

The processing flow of the multiview image decoding device 3002 is the same as the flow of the processing performed by the multiview image decoding device 300 shown in FIG. 19, however, it differs therefrom in the detailed processing of step S304. Here, a prediction image generation method is decided by the optimal prediction image generation method deciding unit 311 in accordance with the processing flow shown in FIG. 7. The content of this processing is the same as that described using FIG. 7 in the first embodiment.

The prediction image generation unit 312 generates a prediction image "Pred" in accordance with this 'mode' using decoded images of areas adjacent to the block 'blk' that have been stored in the decoded image memory 309. Note that because the image generated when the prediction image generation method was being decided is a quasi-prediction image that employs a view synthesis image, unlike the multiview image decoding device 300 shown in FIG. 18, here, it is absolutely necessary for prediction image generation processing to be performed.

If view synthesis images alone are used in this manner whenever a prediction image generation method is evaluated, the advantage is obtained that parallel processing becomes possible. In the multiview image decoding device 300, it is necessary to store decoded images adjacent to the block 'blk' in the decoded image memory 309 in order to decide the prediction image generation method for the block 'blk'. Namely, in order to decide the prediction image generation method for the block 'blk', it has been necessary to wait for the processing to decode areas adjacent to the block 'blk' to be completed. However, in the multiview image decoding device 3002, because the prediction image generation method for the block 'blk' is decided only from view synthesis images, it becomes possible to decide the prediction image generation method independently from the image signal decoding processing for each block.

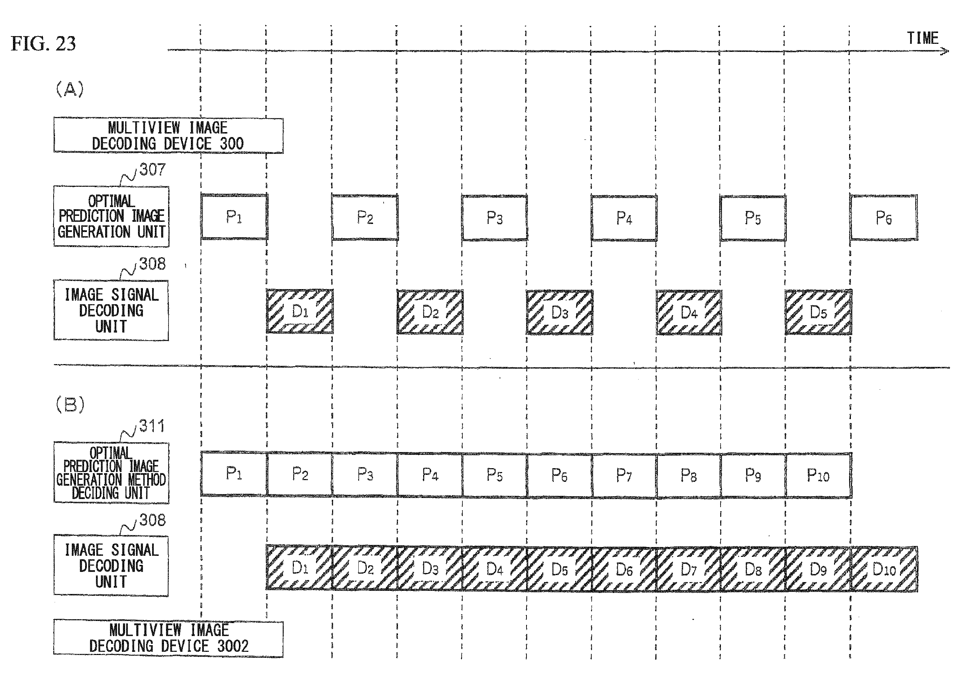

Namely, if the processing to decide the prediction image generation method for the block 'blk' is expressed as '$P_{blk}$', and the processing to decode the image signal thereof is expressed as '$D_{blk}$', and if it is assumed that the blocks are decoded in a raster scanning sequence, then the multiview image decoding device 300 must perform the processing alternatingly as is shown in FIG. 23 (A). In contrast, in the multiview image decoding device 3002, as is shown in FIG. 23 (B), it is possible for the respective processing to be performed independently, so that the processing time can be considerably curtailed. In FIG. 23, the processing to decide the prediction image generation method and the processing to decode the image signal both take the same amount of time, however, even if the times taken by each are mutually different, it is still possible to greatly curtail the processing time through parallelization.

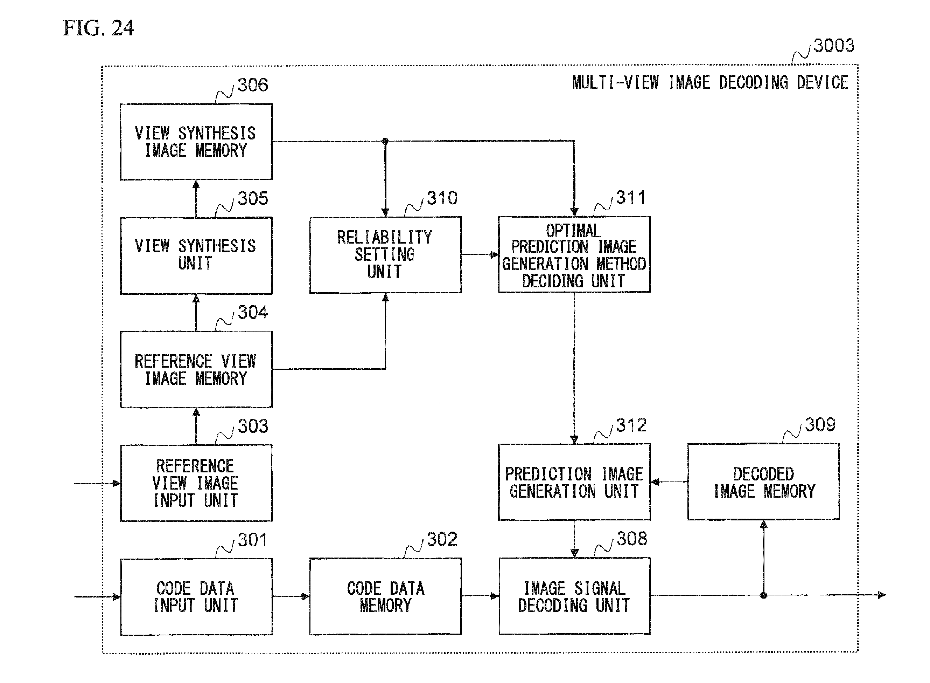

In the multiview image decoding device 3002 as well, it is possible to set a more appropriate prediction image generation method while considering the reliability of view synthesis processing. The device structure in this case takes the form of the multiview image decoding device 3003 shown in FIG. 24.

[Fourth embodiment: Multiview image decoding device]

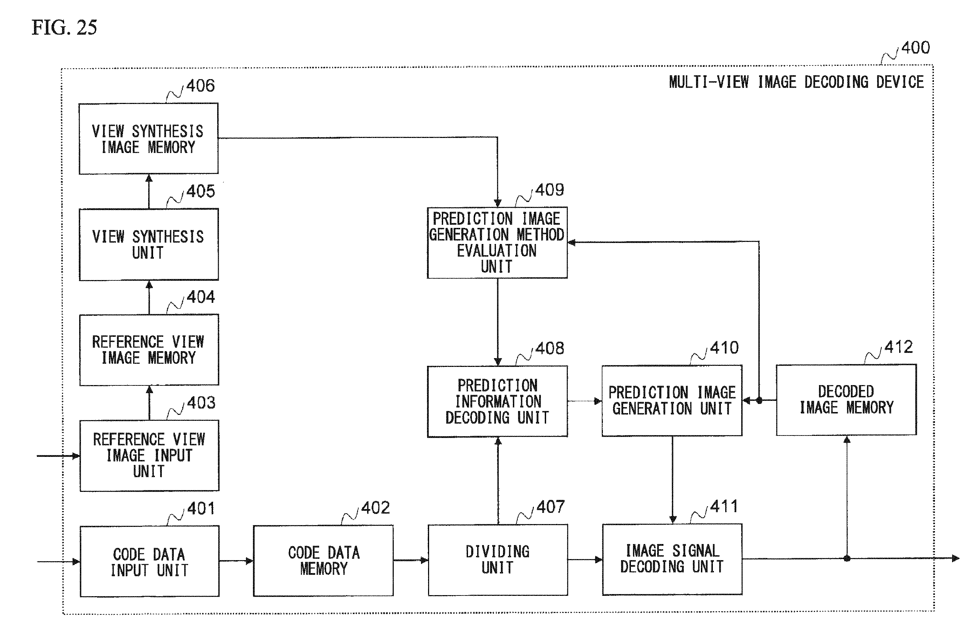

Next, a fourth embodiment of the present invention will be described. FIG. 25 is a block diagram showing the structure of a multiview image decoding device according to a fourth embodiment of the present invention. As is shown in FIG. 25, a multiview image decoding device 400 is provided with a code data input unit 401, code data memory 402, a reference view image input unit 403, reference view image memory 404, a view synthesis unit 405, view synthesis image memory 406, a de- multiplex unit 407, a prediction information decoding unit 408, a prediction image generation method evaluation unit 409, a prediction image generation unit 410, an image signal decoding unit 411, and decoded image memory 412.

The code data input unit 401 receives inputs of code data of decoding target images. The code data memory 402 stores the input code data. The reference view image input unit 403 receives inputs of reference view images. The reference view image memory 404 stores the input reference view images. The view synthesis unit 405 synthesizes images of the encoding target views using the reference view images. The view synthesis image memory 406 stores the view synthesis images. The de-multiplex unit 407 divides input code data into prediction information code data and image signal code data. The prediction information decoding unit 408 decodes the prediction information code data, and generates information that shows the prediction image generation method.

The prediction image generation method evaluation unit 409 estimates methods of generating a prediction image of a decoding target area from decoded images of areas adjacent to the decoding target area using view synthesis images of the decoding target area. The prediction image generation unit 410 generates a prediction image of a decoding target area from decoded images of areas adjacent to the decoding target area in accordance with the supplied prediction image generation method. The image signal decoding unit 411 uses the generated prediction image to decode a decoded image from the code data. The decoded image memory 412 stores the decoded images.

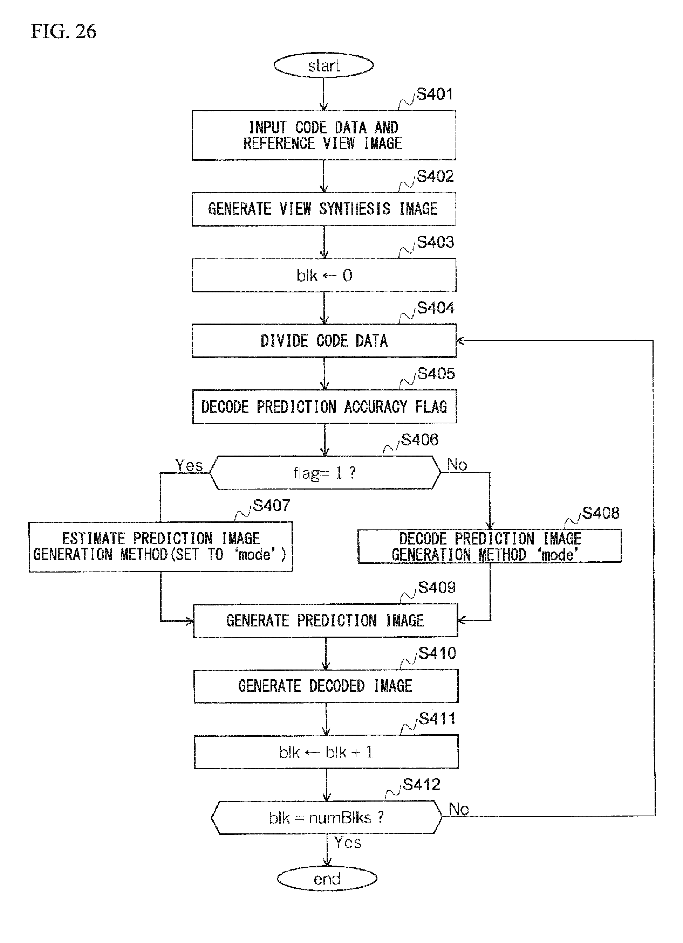

FIG. 26 is a flowchart illustrating operations of the multiview image decoding device 400 according to the fourth embodiment of the present invention. The processing executed by this multiview image decoding device 400 will be described in detail in accordance with this flowchart.

Firstly, code data of an image to be decoded is input by the code data input unit 401, and is stored in the code data memory 402. Reference view images 'Ref$_n$' (wherein n = 1, 2, ..., N) that were photographed from reference viewpoints at the same time as the decoding target image are then input by the reference view image input unit 403, and are stored in the reference view image memory 404 (step S401) . The reference view images that are input here are the same as that used on the encoding side. Note that 'n' is an index showing the reference view, while 'N' is the number of reference views that can be used.

Next, in the view synthesis unit 405, an image photographed at the same viewpoint and at the same time as the decoding target image is synthesized using the image signal of the reference view images, and the synthesis view image 'Syn' is stored in the view synthesis image memory 406 (step S402) . The processing performed here is the same as that performed in step S302 of the third embodiment.

Once the view synthesis image has been generated, the decoding target image is divided, and a prediction image is generated for each of the divided areas. An image signal of the decoding target image is then decoded using the code data (steps S403 through S412). Namely, if the block index to be decoded is expressed as 'blk', and the total number of blocks to be decoded is expressed as 'numBlks', then after 'blk' has been initialized as 0 (i.e., step S403), the following processing (i.e., step S404 through step S410) is repeated while 1 is added to 'blk' (step S411) until 'blk' reaches 'numBlks' (step S412).

Note that, provided that it is possible to generate the above-described view synthesis image for each block, then it is possible to also generate the view synthesis image as a part of the processing that is repeated for each block to be decoded. For example, if depth information is provided for the decoding target image, then it is possible to generate a view synthesis image for each block.

In the processing that is repeated for each block to be decoded, firstly, the code data for the block 'blk' is divided by the de-multiplex unit 407 into prediction information code data and image signal code data (step S404). Next, a prediction accuracy flag 'flag' that shows whether or not the prediction is correct is decoded by the prediction information decoding unit 408 from the prediction information code data (step S405). Once the prediction accuracy flag has been obtained, that prediction accuracy flag is checked (step S406), and the prediction image generation method is decided in accordance with this check (step S407, S408). In the flow shown in FIG. 26, the prediction is shown to be correct when the flag is 1, and the prediction is shown to be incorrect when the flag is 0.

If the prediction is determined to be correct, the prediction image generation method 'mode' for the block 'blk' is estimated by the prediction image generation method evaluation unit 409 using the synthesis view image 'Syn[blk]' for the block 'blk' (step S407). The processing here is the same as that performed in step S204 of the second embodiment. However, the estimated value is not set as the estimated value 'pmode' of the prediction image generation method, but is instead set as the prediction image generation method 'mode'.

If the prediction is determined to be incorrect, the prediction image generation method is decoded by the prediction information decoding unit 408 from the prediction information code data (step S408). Here, a method that matches the method used on the encoding side is used. Namely, if binarization and entropy encoding were employed for the encoding, then entropy decoding processing is performed on the code data, and by then performing inverse binarization on the resulting binary string the prediction image generation method 'mode' can be obtained.

Once the prediction image generation method has been obtained, a prediction image 'Pred[blk]' is generated by the prediction image generation unit 410 for the block 'blk' in accordance with the prediction image generation method 'mode' from decoded images of areas adjacent to the block 'blk' that are stored in the decoded image memory 412 (step S409). If the prediction image generation method is obtained by prediction, then because prediction image candidates are generated in step S407 using the respective prediction image generation methods, those prediction image candidates having the minimum evaluation value are stored and, here, the stored prediction image candidates may also be set as the prediction image. Note that if the prediction image generation method is obtained by decoding, then, here, normally, it is necessary to generate a prediction image.

Once a prediction image has been obtained, the image signal is decoded for the block 'blk' by the image signal decoding unit 411 using the code data for the image signal and the prediction image (step S410). The processing here is the same as that performed in step S306 of the third embodiment. The decoded image obtained as a result of this decoding forms the output from the multiview image decoding device 400, and is also stored in the decoded image memory 412 in order to generate prediction images for other blocks.

Note that in the foregoing description, it is described that a view synthesis image is normally generated for the entire image, however, if a view synthesis image is able to be generate for each block, then it is possible to omit step S402 and to generate the view synthesis image only for the block 'blk' immediately before step S407. In this case, it is no longer necessary to generate unused view synthesis images so that the amount of calculation required for the decoding processing can be reduced.

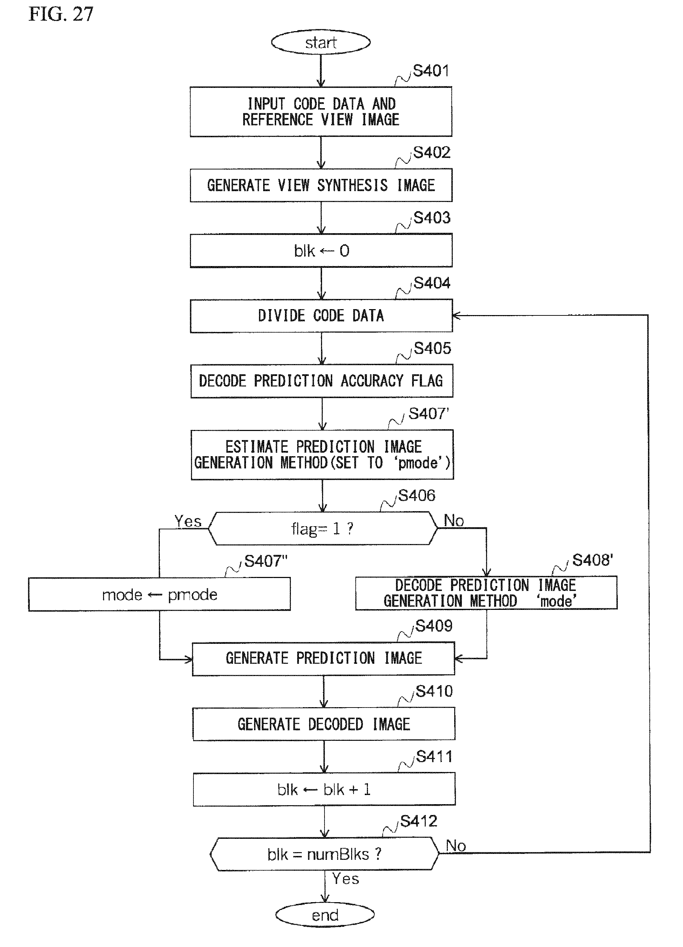

Moreover, in the foregoing description, a case in which the prediction image generation method 'mode' is encoded using a method that does not depend on the estimated value 'pmode' of the prediction image generation method is described. However, there are also cases when the encoding is performed with the code table changed using 'pmode'. The processing flow in this case is shown in FIG. 27. While the basic processing is the same, in the processing flow shown in FIG. 27, prediction accuracy flags are not employed, and the estimated value 'pmode' of the prediction image generation method for the block 'blk' is generated by the prediction image generation method evaluation unit 409 using the view synthesis image 'Syn [blk] ' for the block 'blk' (step S407') . This processing is the same as that performed in step S204 of the second embodiment. If, based on the prediction accuracy flag, the prediction is determined to be correct, then the 'pmode' is set as the prediction image generation method 'mode' (step S407"), while if the prediction is determined to be incorrect, then the prediction image generation method 'mode' is decoded using the prediction information code data, while at the same time the table is changed in accordance with the 'pmode' (step S408') .

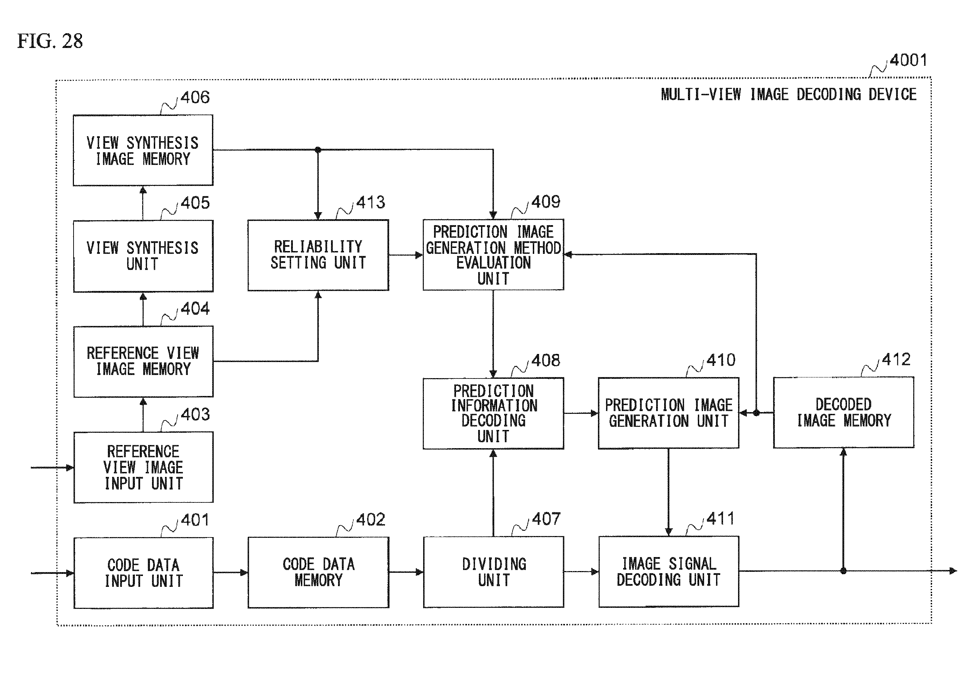

In the fourth embodiment, view synthesis images can be generated at approximately the same level of accuracy in all pixels, however, it is also possible to evaluate the prediction image generation method while considering the reliability of a view synthesis. FIG. 28 is a block diagram of a multiview image decoding device that is used to decide a prediction image generation method using the reliability of view synthesis according to the fourth embodiment of the present invention. A multiview image decoding device 4001 shown in FIG. 28 differs from the multiview image decoding device 400 shown in FIG. 25 in that there is further provided a reliability setting unit 413 that calculates the reliability of performing synthesis on a view synthesis image and notifies the result to the prediction image generation method evaluation unit 409.

If reliability is used, then when the prediction image generation method is being estimated in step S407 and step S407', firstly, the reliability of the view synthesis image for the block 'blk' is calculated and, using this reliability as well as the view synthesis image 'Syn[blk]' for the block 'blk', a prediction image generation method 'mode' or an estimated value 'pmode' for the prediction image generation method is generated for the block 'blk'. The processing to calculate this reliability is the same as that of step S3035 of the third embodiment, and the processing to generate a prediction image generation method or an estimated value thereof using the reliability is the same as that of step S104' of the first embodiment other than that the way in which the generated values are handled is different.

The reliability can be defined in any desired way provided that it is able to show how accurately the synthesis was performed, such as in the manner described in the first embodiment and the like. However, the same definition must be used on both the encoding side and the decoding side. This is in order to avoid the occurrence of coding artifacts such as drift and the like.

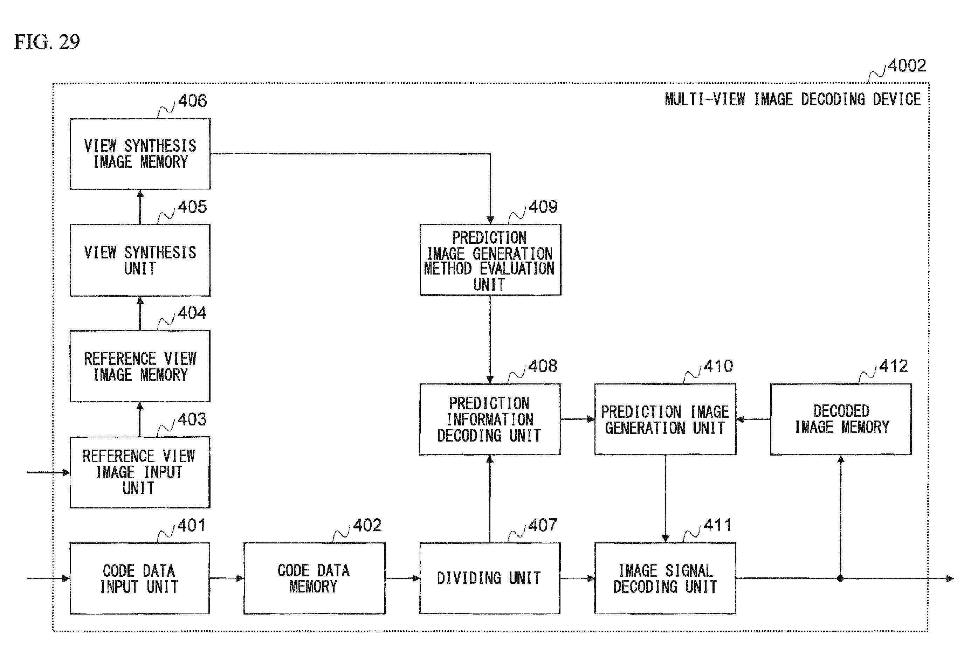

In the fourth embodiment, when the prediction image generation method is being decided, the evaluation is performed using decoded images of the block 'blk' that are stored in the decoded image memory 412, however, it is also possible to perform the  evaluation using only the view synthesis image without using the decoded image. FIG. 29 is a block diagram of a multiview image decoding device that is used to decide a prediction image generation method from only the view synthesis image according to the fourth embodiment of the present invention. A multiview image decoding device 4002 shown in FIG. 29 differs from the multiview image decoding device 400 shown in FIG. 25 in that only a view synthesis image is an input into the prediction image generation method evaluation unit 207.

The processing to estimate a prediction image generation method (step S407, step s407') in this case is the same as that performed in step S104 of the first embodiment, and the prediction image generation method 'mode' is generated by the prediction image generation method evaluation unit 409 in accordance with the processing flow shown in the FIG. 7. However, in step S407', instead of the prediction image generation method 'mode', an estimated value 'pmode' of the prediction image generation method is determined.

If only a view synthesis image is used when evaluating a prediction image generation method in this manner, the advantage is obtained that parallel processing becomes possible. In the multiview image decoding device 400, in order to decide the prediction image generation method for the block 'blk', it is necessary to generate decoded images of areas adjacent to the block 'blk'. Namely, in order to decide the prediction image generation method for the block 'blk', it is necessary to wait for the completion of the decoding processing in areas adjacent to the block 'blk'. However, in the multiview image decoding device 4002, because the prediction image generation method for the block 'blk' is decided only from the view synthesis image, it is possible to decide the prediction image generation method independently from the image signal decoding processing of each block.

Note that when the parallel processing performance is improved in this manner, if estimated values of the prediction image generation methods are not created, then, immediately prior to the processing to decide the prediction image generation method (i.e., step S407), it is also possible to generate a view synthesis image only for both the  block 'blk' and the pixels that are adjacent to the block 'blk' and that are used to generate quasi-prediction images. In this case, it is no longer necessary to generate unused view synthesis images so that the amount of calculation required for the decoding processing can be reduced.

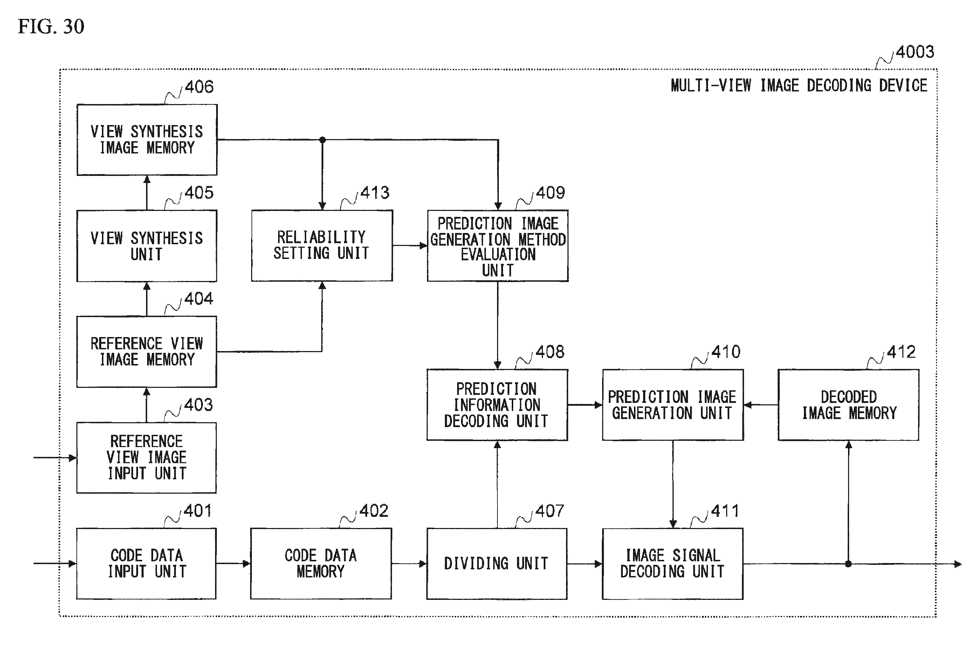

In the multiview image decoding device 4002 as well, it is possible to set a more appropriate prediction image generation method while considering the reliability of view synthesis processing. The device structure in this case takes the form of the multiview image decoding device 4003 shown in FIG. 30.

In the above-described first through fourth embodiments, processing to perform encoding and decoding on all of the blocks in an image by performing the intra prediction of the present invention has been described, however, it is also possible to perform this encoding and decoding while switching between intra prediction and interview prediction, which is typified by the disparity compensated prediction used in H.264/AVC Annex. H and the like. In this case, it is necessary to encode and decode information that shows whether intra prediction was used or whether interview prediction was used in each block.

In the above-described first through fourth embodiments, processing to encode and decode a multiview image has been described, however, the present invention can also be applied to the encoding and decoding of multiview moving images by applying the present invention to a plurality of continuous images. Moreover, the present invention can also be applied to only a portion of the frames of a moving image or to a portion of the blocks of an image.

In the above-described first through fourth embodiments, a case has been described in which, as a reference view image, an image that was photographed from a reference viewpoint at the same time as an encoding or decoding target image is input, and is used to generate a view synthesis image. However, when performing the encoding or decoding of a multiview moving image, it is also possible to input images that have already been encoded or decoded that were photographed from a reference viewpoint at a different time from the encoding or decoding target image, and to generate synthesis view images temporally and spatially using these input images. Deciding which images that were photographed at the reference viewpoints of which timings are to be input depends on an algorithm for generating the view synthesis image. However, in order to prevent the occurrence of coding artifact such as drift and the like, the same algorithm must be used on both the encoding side and the decoding side.

Moreover, in the foregoing description, a case in which the prediction image generation method is limited to intra prediction is described, however, expanding the prediction image generation method of the present invention so as to include inter- frame prediction such as disparity compensated prediction and motion compensated prediction can be easily inferred. Even when inter- frame prediction is included, in the same way, a prediction image is generated from a reference frame that has already been encoded, and by comparing this prediction image with the view synthesis image, that particular prediction image generation method can be evaluated in the same way. Moreover, it is also possible to generate a quasi- prediction image by generating a view synthesis image for a reference frame, and to perform the processing to decide the prediction image generation method and the processing to encode or decode the image signal in parallel. By expanding the prediction image generation method in this way, it is possible to reduce the amount of code required for the information that shows whether intra prediction or inter- frame prediction was used for each block.

The above-described multiview image encoding and multiview image decoding processing can be achieved by means of a computer and a software program. This program can be provided by recording it on a computer-readable recording medium, or it can be provided via a network.

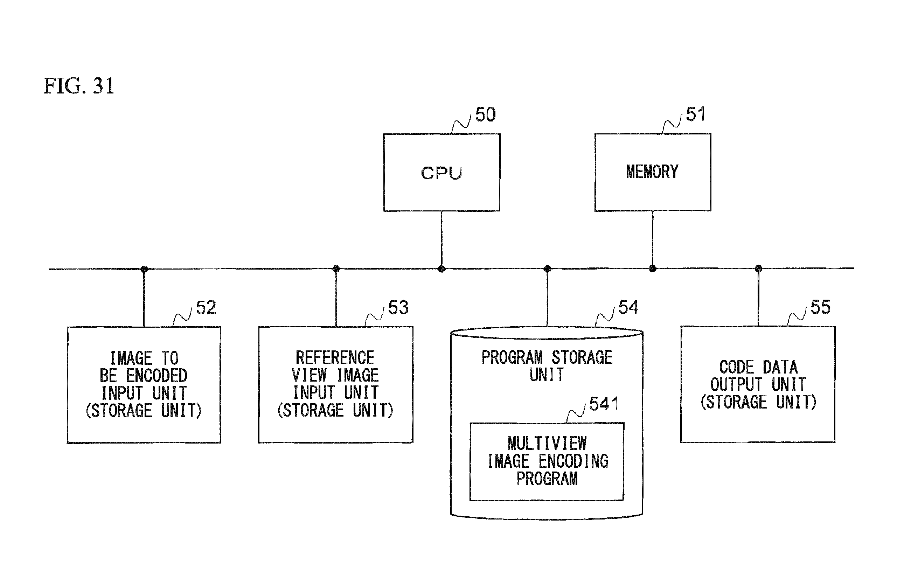

FIG. 31 shows an example of the hardware structure when the multiview image encoding device according to the fourth embodiment of the present invention is formed by means of a computer and a software program. This system is structured such that: a CPU 50 that executes the program; memory 51 such as RAM or the like in which programs and data accessed by the CPU 50 are stored; an image to be encoded input unit 52 (or a storage unit in which image signals from a disk device or the like are stored) that receives inputs of image signals that are to be encoded from a camera or the like; a reference view image input unit 53 (or a storage unit in which image signals from a disk device or the like are stored) that receives inputs of image signals from reference viewpoints via, for example, a network; a program storage device 54 on which is stored a multiview image encoding program 541, namely, a software program that enables the processing described in FIG. 1 and FIG. 2 to be executed by the CPU 50; and a code data output unit 55 (or a storage unit in which multiplexed code data from a disk device or the like is stored) that outputs, for example, via a network code data that has been generated as a result of the CPU 50 executing the multiview image encoding program 541 that has been loaded into the memory 51 are connected together by means of a bus.

Although omitted from the drawings, hardware such as a view synthesis image storage unit, a prediction image candidate storage unit, a prediction image storage unit, a code data storage unit, and a decoded image storage unit and the like are additionally provided and are used to implement the methods of the present invention. Moreover, a reliability level storage unit, a quasi-prediction image storage unit, a prediction image generation method storage unit, a prediction image generation method estimation value storage unit, an image signal code data storage unit, and a prediction information code data storage unit may also be used.

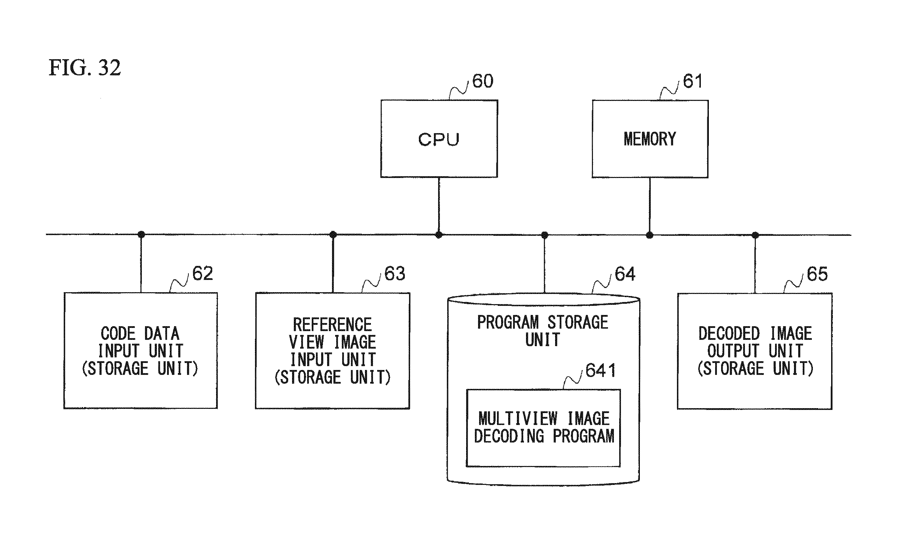

FIG. 32 shows an example of the hardware structure when the multiview image decoding device according to the fourth embodiments of the present invention is formed by means of a computer and a software program. This system is structured such that: a CPU 60 that executes the program; memory 61 such as RAM or the like in which programs and data accessed by the CPU 60 are stored; a code data input unit 62 (or a storage unit in which multiplexed code data from a disk device or the like is stored) that receives inputs of code data that has been encoded by the multiview image encoding device via the method of the present invention; a reference view image input unit 63 (or a storage unit in which image signals from a disk device or the like are stored) that receives inputs of image signals from reference viewpoints via, for example, a network; a program storage device 64 on which is stored a multiview image decoding program 641, namely, a software program that enables the processing described in FIG. 18 and FIG. 19 to be executed by the CPU 60; and a decoded image output section 65 that outputs to an image reproduction device or the like decoded images that have been obtained as a result of the CPU 60 executing the multiview image decoding program 641 that has been loaded into the memory 61 so as to decode the code data are connected together by means of a bus.

Although omitted from the drawings, hardware such as a view synthesis image storage unit, a prediction image candidate storage unit, a prediction image storage unit, and a decoded image storage unit and the like are additionally provided and are used to implement the methods of the present invention. Moreover, a reliability level storage unit, a quasi-prediction image storage unit, a prediction image generation method storage unit, a prediction image generation method estimation value storage unit, a prediction accuracy flag storage unit, an image signal code data storage unit, and a prediction information code data storage unit may also be used.

While preferred embodiments of the invention have been described and illustrated above, it should be understood that these are exemplary of the invention and are not to be considered as limiting. Additions, omissions, substitutions, and other modifications can be made without departing from the conceptual and technical scope of the present invention. Accordingly, the invention is not to be considered as limited by the foregoing description.

INDUSTRIAL APPLICABILITY

According to the present invention, it is possible to reduce the amount of code that is required to encode information that shows the intra prediction method when intra prediction encoding is performed on an image signal within a block.

[Description of the Reference Symbols]

| | |
|---|---|
| 100 | Multiview image encoding device |
| 1001 | Multiview image encoding device |
| 1002 | Multiview image encoding device |
| 1003 | Multiview image encoding device |
| 200 | Multiview image encoding device |
| 2001 | Multiview image encoding device |
| 2002 | Multiview image encoding device |
| 2003 | Multiview image encoding device |
| 101 | Encoding target image input unit |
| 201 | Encoding target image input unit |
| 102 | Encoding target image memory |
| 202 | Encoding target image memory |
| 103 | Reference view image input unit |
| 203 | Reference view image input unit |
| 303 | Reference view image input unit |
| 403 | Reference view image input unit |
| 104 | Reference view image memory |
| 204 | Reference view image memory |
| 304 | Reference view image memory |
| 404 | Reference view image memory |
| 105 | View synthesis unit |
| 205 | View synthesis unit |
| 305 | View synthesis unit |
| 405 | View synthesis unit |
| 106 | View synthesis image memory |
| 206 | View synthesis image memory |
| 306 | View synthesis image memory |
| 406 | View synthesis image memory |
| 107 | Optimal prediction image generation unit |

207 Optimal prediction image generation unit
108 Image signal encoding unit
210 Image signal encoding unit
109 Image signal decoding unit
211 Image signal decoding unit
308 Image signal decoding unit
411 Image signal decoding unit
110 Decoded image memory
212 Decoded image memory
309 Decoded image memory
412 Decoded image memory
111 Reliability setting unit
215 Reliability setting unit
310 Reliability setting unit
413 Reliability setting unit
112 Optimal prediction image generation method deciding unit
311 Optimal prediction image generation method deciding unit
113 Prediction image generation unit
208 Prediction image generation unit
312 Prediction image generation unit
410 Prediction image generation unit
207 Prediction image generation method evaluation unit
409 Prediction image generation method evaluation unit
209 Prediction information encoding unit
213 Multiplexing unit
300 Multiview image decoding device
3001 Multiview image decoding device
3002 Multiview image decoding device
3003 Multiview image decoding device
400 Multiview image decoding device
4001 Multiview image decoding device
4002 Multiview image decoding device
4003 Multiview image decoding device
301 Code data input unit
401 Code data input unit
302 Code data memory
402 Code data memory
407 Dividing unit
408 Prediction information decoding unit

**Claims**

1. A multiview image encoding method in which, when an encoding target image for a particular view to be encoded of a multiview image is being encoded, the encoding target image is divided into areas and predictive encoding is performed on each one of these areas using either one or a plurality of reference view images that has already been encoded and that was photographed at the same time as the encoding target image from reference views that are different from the view to be encoded, comprising:

a view synthesis image generation step in which, using the reference view image, a view synthesis image is generated for the view to be encoded;
a prediction image candidate generation step in which a plurality of intra prediction image candidates are generated for each area to be encoded using decoded images of adjacent areas that have already been encoded;
a prediction image candidate evaluation step in which evaluation values are decided for the intra prediction image candidates using the view synthesis image;
a prediction image generation step in which an intra prediction image is generated from the intra prediction image candidates based on the evaluation values; and
an image signal encoding step in which the encoding target image of an area to be encoded is predictively encoded using the intra prediction image.

2. The multiview image encoding method according to claim 1, wherein the multiview image encoding method further comprises a reliability setting step in which a degree of reliability that shows the reliability of the view synthesis image is set for each pixel of the view synthesis image, and, in the prediction image candidate evaluation step a weighting is applied to the evaluation values based on the reliability.

3. The multiview image encoding method according to claim 1 or claim 2, wherein, in the prediction image candidate generation step, for each area to be encoded, a plurality of intra prediction image candidates are generated using view synthesis images of areas that have already been encoded that are adjacent to the respective areas to be encoded, and, in the prediction image generation step an intra prediction image is generated using decoded images of areas that have already been encoded that are adjacent to the area to be encoded based on the evaluation values.

4. The multiview image encoding method according to claim 1, claim 2, or claim 3, wherein the multiview image encoding method further comprises:

a prediction image generation method deciding step in which an intra prediction image generation method is decided using the encoding target image for each area to be encoded;
a prediction image generation method estimation step in which the intra prediction image generation method is estimated based on the evaluation values; and
a prediction method encoding step in which, when the estimated value of the intra prediction image generation method is equal to the prediction image generation method, information showing that the estimation is correct is encoded, while when they are not equal, information showing that the estimation is incorrect and information showing the prediction image generation method are encoded, wherein
in the prediction image generation step, an intra prediction image is generated using decoded images of areas that have already been encoded that are adjacent to the area to be encoded in accordance with the prediction image generation method.

5. A multiview image decoding method in which, when code data of an decoding target image for a particular view to be decoded of a multiview image is being decoded, the decoding target image is divided into areas and each one of these areas is decoded using either one or a plurality of reference view images that has already been decoded and that was photographed at the same time as the decoding target image from reference views that are different from the view to be decoded, comprising:

a view synthesis image generation step in which, using the reference view image, a view synthesis image is generated for the view to be decoded;
a prediction image candidate generation step in which a plurality of intra prediction image candidates are generated for each area to be decoded using decoded images of adjacent areas that have already been decoded;
a prediction image candidate evaluation step in which evaluation values are decided for the intra prediction image candidates using the view synthesis image;
a prediction image generation step in which an intra prediction image is generated from the intra prediction image candidates based on the evaluation values; and
an image signal decoding step in which, with the intra prediction image used as a prediction signal, the decoding target image that has been predictively encoded is decoded from the code data.

6. The multiview image decoding method according to claim 5, wherein the multiview image decoding method further comprises a reliability setting step in which a degree of reliability that shows the reliability of the view synthesis image is set for each pixel of the view synthesis image, and, in the prediction image candidate evaluation step a weighting is applied to the evaluation values based on the reliability.

7. The multiview image decoding method according to claim 5 or claim 6, wherein, in the prediction image candidate generation step, for each area to be decoded, a plurality of intra prediction image candidates are generated using view synthesis images of areas that have already been decoded that are adjacent to the respective areas to be decoded, and, in the prediction image generation step an intra prediction image is generated using decoded images of areas that have already been encoded that are adjacent to the area to be decoded based on the evaluation values.

8. The multiview image decoding method according to claim 5, claim 6, or claim 7, wherein the multiview image decoding method further comprises:

a prediction image generation method estimation step in which the intra prediction image generation method is estimated based on the evaluation values;

a flag decoding step in which a flag that shows whether or not the estimated value of the intra prediction image generation method is correct is decoded from the code data; and

a prediction method setting step in which, the estimated value of the intra prediction image generation method is set as the intra prediction image generation method when the flag shows that the estimated value is correct, while a value that shows the intra prediction image generation method and is decoded from the code data is set as the intra prediction image generation method when the flag shows that the estimated value is incorrect, wherein

in the prediction image generation step, an intra prediction image is generated using decoded images of areas that have already been decoded that are adjacent to the area to be decoded in accordance with the prediction image generation method.

9. A multiview image encoding device that, when an encoding target image for a particular view to be encoded of a multiview image is being encoded, divides the encoding target image into areas and performs predictive encoding on each one of these areas using either one or a plurality of reference view images that has already been encoded and that was photographed at the same time as the encoding target image from reference views that are different from the view to be encoded, comprising:

a view synthesis image generation unit that, using the reference view image, generates a view synthesis image for the view to be encoded;

a prediction image candidate generation unit that generates a plurality of intra prediction image candidates for each area to be encoded using decoded images of adjacent areas that have already been encoded;

a prediction image candidate evaluation unit that decides evaluation values for the intra prediction image candidates using the view synthesis image;

a prediction image generation unit that generates an intra prediction image from the intra prediction image candidates based on the evaluation values; and

an image signal encoding unit that performs predictive encoding on the encoding target image of an area to be encoded using the intra prediction image.

10. The multiview image encoding device according to claim 9, wherein is the multiview image encoding device further comprises a reliability setting unit that sets a degree of reliability that shows the reliability of the view synthesis image for each pixel of the view synthesis image, and

the prediction image candidate evaluation unit applies a weighting to the evaluation values based on the reliability.

11. The multiview image encoding device according to claim 9 or claim 10, wherein, for each area to be encoded, the prediction image candidate generation unit generates a plurality of intra prediction image candidates using view synthesis images of areas that have already been encoded that are adjacent to the respective areas to be encoded, and

the prediction image generation unit generates an intra prediction image using decoded images of areas that have already been encoded that are adjacent to the area to be encoded based on the evaluation values.

12. The multiview image encoding device according to claim 9, claim 10, or claim 11, wherein the multiview image encoding device further comprises:

a prediction image generation method deciding unit that decides an intra prediction image generation method using an encoding target image for each area to be encoded;

a prediction image generation method estimation unit that estimates the intra prediction image generation method based on the evaluation values; and

a prediction method encoding unit that, when the estimated value of the intra prediction image generation method is equal to the prediction image generation method, encodes information showing that the estimation is correct, while when they are not equal, encodes information showing that the estimation is incorrect and information showing the prediction image generation method, wherein

the prediction image generation unit generates an intra prediction image using decoded images of areas that have already been encoded that are adjacent to the area to be encoded in accordance with the prediction image generation method.

13. A multiview image decoding device that, when code data of a decoding target image for a particular view to be decoded of a multiview image is being decoded, divides the decoding target image into areas and decodes each one of these areas using either one or a plurality of reference view images that has already been decoded and that was photographed at the same time as the decoding target image from reference views that are different from the view to be decoded, comprising:

a view synthesis image generation unit that, using the reference view image, generates a view synthesis image for the view to be decoded;

a prediction image candidate generation unit that generates a plurality of intra prediction image candidates for each area to be decoded using decoded images of adjacent areas that have already been decoded;

a prediction image candidate evaluation unit that decides evaluation values for the intra prediction image candidates using the view synthesis image;

a prediction image generation unit that generates an intra prediction image from the intra prediction image candidates based on the evaluation values; and

an image signal decoding unit that, using the intra prediction image as a prediction signal, decodes the decoding target image that has been predictively encoded from the code data.

14. The multiview image decoding device according to claim 13, wherein the multiview image decoding device further comprises a reliability setting unit that sets a degree of reliability that shows the reliability of the view synthesis image for each pixel of the view synthesis image, and

the prediction image candidate evaluation unit applies a weighting to the evaluation values based on the reliability.

15. The multiview image decoding device according to claim 13 or claim 14, wherein, for each area to be decoded, the prediction image candidate generation unit generates a plurality of intra prediction image candidates using view synthesis images of areas that have already been decoded that are adjacent to the respective areas to be decoded, and

the prediction image generation unit generates an intra prediction image using decoded images of areas that have already been encoded that are adjacent to the area to be decoded based on the evaluation values.

16. The multiview image decoding device according to claim 13, claim 14, or claim 15, wherein the multiview image decoding device further comprises:

a prediction image generation method estimation unit that estimates the intra prediction image generation method based on the evaluation values;

a flag decoding unit that decodes a flag that shows whether or not the estimated value of the intra prediction image generation method is correct from the code data; and

a prediction method setting unit that sets the estimated value of intra prediction image generation method as the intra prediction image generation method when the flag shows that the estimated value is correct, and decodes a value that shows the intra prediction image generation method from the coded data and then sets the decoded value as the intra prediction image generation method when the flag shows that the estimated value is incorrect, wherein

the prediction image generation unit generates an intra prediction image using decoded images of areas that have already been decoded that are adjacent to the area to be decoded in accordance with the prediction image generation method.

17. A multiview image encoding program that causes the multiview image encoding method described in any one of claims 1 through 4 to be executed on a computer.

18. A multiview image decoding program that causes the multiview image decoding method described in any one of claims 5 through 8 to be executed on a computer.

FIG. 1

FIG. 2

```
                    ┌─────────┐
                    │  start  │
                    └────┬────┘
                         │                    S101
            ┌────────────▼────────────────┐
            │   INPUT IMAGE TO BE ENCODED  │
            │    AND REFERENCE VIEW IMAGE  │
            └────────────┬────────────────┘
                         │                    S102
            ┌────────────▼────────────────┐
            │  GENERATE VIEW SYNTHESIS IMAGE │
            └────────────┬────────────────┘
                         │                    S103
            ┌────────────▼────────────────┐
            │          blk ← 0            │
            └────────────┬────────────────┘
                         │                    S104
            ┌────────────▼────────────────┐
            │   DECIDE OPTIMAL PREDICTION  │◄──┐
            │    IMAGE GENERATION METHOD   │   │
            └────────────┬────────────────┘   │
                         │                S105 │
            ┌────────────▼────────────────┐   │
            │   GENERATE PREDICTION IMAGE  │   │
            └────────────┬────────────────┘   │
                         │                S106 │
            ┌────────────▼────────────────┐   │
            │      ENCODE IMAGE SIGNAL     │   │
            └────────────┬────────────────┘   │
                         │                S107 │
            ┌────────────▼────────────────┐   │
            │     GENERATE DECODED IMAGE   │   │
            └────────────┬────────────────┘   │
                         │                S108 │
            ┌────────────▼────────────────┐   │
            │        blk ← blk + 1         │   │
            └────────────┬────────────────┘   │
                         │                S109 │
                    ┌────▼─────────┐    No     │
                    │ blk = numBlks ?├──────────┘
                    └────┬─────────┘
                         │ Yes
                    ┌────▼────┐
                    │   end   │
                    └─────────┘
```

28

FIG. 3

```
              ┌─────────┐
              │  start  │
              └─────────┘
                   │
                   ▼                          S1401
  ┌────────────────────────────────────────────┐
  │  m ← 0, mode ← 0, min_cost ← MAX            │
  └────────────────────────────────────────────┘
                   │
                   ▼                          S1402
  ┌────────────────────────────────────────────┐
  │   GENERATE PREDICTION IMAGE Predm[blk]      │◄──┐
  │       FOR BLOCK blk FROM DECODED            │   │
  │      IMAGE IN ACCORDANCE WITH THE           │   │
  │  PREDICTION IMAGE GENERATION METHOD m       │   │
  └────────────────────────────────────────────┘   │
                   │                                │
                   ▼                          S1403 │
  ┌────────────────────────────────────────────┐   │
  │   DETERMINE EVALUATION VALUE cost(m)        │   │
  │      USING Predm[blk] and Syn[blk]          │   │
  └────────────────────────────────────────────┘   │
                   │                                │
                   ▼                    S1404       │
         ╱────────────────────╲         No          │
        ⟨  cost(m) < min_cost ? ⟩──────────┐        │
         ╲────────────────────╱            │        │
                   │ Yes                   │        │
                   ▼              S1405     │        │
  ┌────────────────────────────────────┐   │        │
  │  mode ← m, min_cost ← cost(m)       │   │        │
  └────────────────────────────────────┘   │        │
                   │                        │        │
                   ▼              S1406     │        │
  ┌────────────────────────────────────────┐│       │
  │            m ← m + 1                    │◄┘       │
  └────────────────────────────────────────┘         │
                   │                                  │
                   ▼                    S1407         │
         ╱────────────────────╲         No           │
        ⟨   m = numModes ?     ⟩────────────────────┘
         ╲────────────────────╱
                   │ Yes
                   ▼
              ┌─────────┐
              │   end   │
              └─────────┘
```

FIG. 4

EP 2 651 136 A1

FIG. 5

```
                    ( start )
                        │
                        ▼              S101
        ┌───────────────────────────────┐
        │   INPUT IMAGE TO BE ENCODED    │
        │    AND REFERENCE VIEW IMAGE    │
        └───────────────────────────────┘
                        │
                        ▼              S102
        ┌───────────────────────────────┐
        │   GENERATE VIEW SYNTHESIS IMAGE │
        └───────────────────────────────┘
                        │
                        ▼              S103
        ┌───────────────────────────────┐
        │            blk ← 0             │
        └───────────────────────────────┘
                        │
                        ▼              S1035
        ┌───────────────────────────────┐
        │      CALCULATE RELIABILITY     │◄──┐
        └───────────────────────────────┘   │
                        │                    │
                        ▼              S104' │
        ┌───────────────────────────────┐   │
        │    DECIDE OPTIMAL PREDICTION   │   │
        │     IMAGE GENERATION METHOD    │   │
        └───────────────────────────────┘   │
                        │                    │
                        ▼              S105  │
        ┌───────────────────────────────┐   │
        │     GENERATE PREDICTION IMAGE   │   │
        └───────────────────────────────┘   │
                        │                    │
                        ▼              S106  │
        ┌───────────────────────────────┐   │
        │       ENCODE IMAGE SIGNAL      │   │
        └───────────────────────────────┘   │
                        │                    │
                        ▼              S107  │
        ┌───────────────────────────────┐   │
        │     GENERATE DECODED IMAGE     │   │
        └───────────────────────────────┘   │
                        │                    │
                        ▼              S108  │
        ┌───────────────────────────────┐   │
        │          blk ← blk + 1         │   │
        └───────────────────────────────┘   │
                        │                    │
                        ▼              S109  │
                 ╱─────────────────╲    No   │
                ⟨  blk = numBlks ?  ⟩─────────┘
                 ╲─────────────────╱
                        │ Yes
                        ▼
                    (  end  )
```

FIG. 6

MULTI-VIEW IMAGE ENCODING DEVICE 1002

106 VIEW SYNTHESIS IMAGE MEMORY

105 VIEW SYNTHESIS UNIT

104 REFERENCE VIEW IMAGE MEMORY

103 REFERENCE VIEW IMAGE INPUT UNIT

101 ENCODING TARGET IMAGE INPUT UNIT

102 ENCODING TARGET IMAGE MEMORY

108 IMAGE SIGNAL ENCODING UNIT

112 OPTIMAL PREDICTION IMAGE GENERATION METHOD DECIDING UNIT

113 PREDICTION IMAGE GENERATION UNIT

109 IMAGE SIGNAL DECODING UNIT

110 DECODED IMAGE MEMORY

EP 2 651 136 A1

FIG. 7

```
                    ( start )
                       |
                       v                        S1411
   +-------------------------------------------+
   |  m <- 0, mode <- 0, min_cost <- MAX       |
   +-------------------------------------------+
                       |
                       v                        S1412
   +-------------------------------------------+
   |     GENERATE QUASI-PREDICTION IMAGE       |<----+
   | QPredm[blk] FOR BLOCK blk FROM SYNTHESIS   |     |
   |     IMAGE IN ACCORDANCE WITH THE          |     |
   | PREDICTION IMAGE GENERATION METHOD m      |     |
   +-------------------------------------------+     |
                       |                             |
                       v                        S1413|
   +-------------------------------------------+     |
   |  DETERMINE EVALUATION VALUE cost(m)       |     |
   |    USING QPredm[blk] and Syn[blk]         |     |
   +-------------------------------------------+     |
                       |                             |
                       v          S1414             |
              < cost(m) < min_cost ? >----No----+   |
                       |                         |   |
                      Yes              S1415     |   |
   +-------------------------------------------+ |   |
   |    mode <- m, min_cost <- cost(m)         | |   |
   +-------------------------------------------+ |   |
                       |              S1416      |   |
                       v                         |   |
   +-------------------------------------------+<+   |
   |              m <- m + 1                    |     |
   +-------------------------------------------+     |
                       |              S1417          |
                       v                             |
              < m = numModes ? >------No-------------+
                       |
                      Yes
                       v
                    ( end )
```

FIG. 8

(A)

MULTIVIEW IMAGE
ENCODING DEVICE 100

107
OPTIMAL
PREDICTION IMAGE
GENERATION UNIT

$P_1$  $P_2$  $P_3$  $P_4$  $P_5$  $P_6$

108
IMAGE SIGNAL
ENCODING
UNIT

$E_1$  $E_2$  $E_3$  $E_4$  $E_5$

(B)

112
OPTIMAL
PREDICTION IMAGE
GENERATION METHOD
DECIDING UNIT

$P_1$  $P_2$  $P_3$  $P_4$  $P_5$  $P_6$  $P_7$  $P_8$  $P_9$  $P_{10}$

108
IMAGE SIGNAL
ENCODING
UNIT

$E_1$  $E_2$  $E_3$  $E_4$  $E_5$  $E_6$  $E_7$  $E_8$  $E_9$  $E_{10}$

MULTIVIEW IMAGE
ENCODING DEVICE 1002

TIME

FIG. 9

TIME

(A)

| MULTIVIEW IMAGE ENCODING DEVICE 100 |

107 OPTIMAL PREDICTION IMAGE GENERATION UNIT

$P_1$   $P_2$   $P_3$   $P_4$   $P_5$

108 IMAGE SIGNAL ENCODING UNIT

$E_1$   $E_2$   $E_3$   $E_4$

(B)

112 OPTIMAL PREDICTION IMAGE GENERATION METHOD DECIDING UNIT

$P_1$  $P_2$  $P_3$  $P_4$  $P_5$  $P_6$  $P_7$  $P_8$  $P_9$  $P_{10}$

108 IMAGE SIGNAL ENCODING UNIT

$E_1$  $E_2$  $E_3$  $E_4$  $E_5$  $E_6$  $E_7$

| MULTIVIEW IMAGE ENCODING DEVICE 1002 |

FIG. 10

TIME →

(A)

MULTIVIEW IMAGE
ENCODING DEVICE 100

107
OPTIMAL
PREDICTION IMAGE
GENERATION UNIT

$P_1$　　$P_2$　　$P_3$　　$P_4$　　$P_5$

108
IMAGE SIGNAL
ENCODING
UNIT

$E_1$　　$E_2$　　$E_3$　　$E_4$

(B)

112
OPTIMAL
PREDICTION IMAGE
GENERATION METHOD
DECIDING UNIT

$P_1$　$P_2$　$P_3$　$P_4$　$P_5$　$P_6$　$P_7$

108
IMAGE SIGNAL
ENCODING
UNIT

$E_1$　$E_2$　$E_3$　$E_4$　$E_5$　$E_6$　$E_7$

MULTIVIEW IMAGE
ENCODING DEVICE 1002

EP 2 651 136 A1

36

EP 2 651 136 A1

FIG. 11

TIME →

(A)

| MULTIVIEW IMAGE ENCODING DEVICE 100 |
|---|

107
OPTIMAL PREDICTION IMAGE GENERATION UNIT

$P_1$ $P_2$ $P_3$ $P_4$ $P_5$

108
IMAGE SIGNAL ENCODING UNIT

$E_1$ $E_2$ $E_3$ $E_4$

(B)

112
OPTIMAL PREDICTION IMAGE GENERATION METHOD DECIDING UNIT

$P_1$ $P_3$ $P_5$ $P_7$ $P_9$ $P_{11}$ $P_{13}$

$P_2$ $P_4$ $P_6$ $P_8$ $P_{10}$ $P_{12}$ $P_{14}$

108
IMAGE SIGNAL ENCODING UNIT

$E_1$ $E_2$ $E_3$ $E_4$ $E_5$ $E_6$ $E_7$ $E_8$ $E_9$

| MULTIVIEW IMAGE ENCODING DEVICE 1002 |
|---|

FIG. 12

FIG. 13

EP 2 651 136 A1

FIG. 14

```
                      ( start )
                          │
                          ▼                    S201
        ┌──────────────────────────────────┐
        │    INPUT IMAGE TO BE ENCODED      │
        │    AND REFERENCE VIEW IMAGE       │
        └──────────────────────────────────┘
                          │
                          ▼                    S202
        ┌──────────────────────────────────┐
        │    GENERATE VIEW SYNTHESIS IMAGE  │
        └──────────────────────────────────┘
                          │
                          ▼                    S203
        ┌──────────────────────────────────┐
        │            blk ← 0                │
        └──────────────────────────────────┘
                          │
                          ▼                    S204
        ┌──────────────────────────────────┐◄──┐
        │      ESTIMATE PREDICTION          │   │
        │    IMAGE GENERATION METHOD        │   │
        └──────────────────────────────────┘   │
                          │                     │
                          ▼              S205   │
        ┌──────────────────────────────────┐   │
        │       DECIDE PREDICTION           │   │
        │    IMAGE GENERATION METHOD        │   │
        └──────────────────────────────────┘   │
                          │                     │
                          ▼              S206   │
        ┌──────────────────────────────────┐   │
        │    GENERATE PREDICTION IMAGE      │   │
        └──────────────────────────────────┘   │
                          │                     │
                          ▼              S207   │
        ┌──────────────────────────────────┐   │
        │  ENCODE PREDICTION INFORMATION    │   │
        └──────────────────────────────────┘   │
                          │                     │
                          ▼              S208   │
        ┌──────────────────────────────────┐   │
        │      ENCODE IMAGE SIGNAL          │   │
        └──────────────────────────────────┘   │
                          │                     │
                          ▼              S209   │
        ┌──────────────────────────────────┐   │
        │    GENERATE DECODED IMAGE         │   │
        └──────────────────────────────────┘   │
                          │                     │
                          ▼              S210   │
        ┌──────────────────────────────────┐   │
        │      MULTIPLEX CODE DATA          │   │
        └──────────────────────────────────┘   │
                          │                     │
                          ▼              S211   │
        ┌──────────────────────────────────┐   │
        │          blk ← blk + 1            │   │
        └──────────────────────────────────┘   │
                          │                     │
                          ▼              S212   │
              ╱───────────────────────╲    No  │
             <    blk = numBlks ?       >───────┘
              ╲───────────────────────╱
                          │ Yes
                          ▼
                      ( end )
```

FIG. 15

MULTI-VIEW IMAGE ENCODING DEVICE 2001

206 VIEW SYNTHESIS IMAGE MEMORY

205 VIEW SYNTHESIS UNIT

204 REFERENCE VIEW IMAGE MEMORY

203 REFERENCE VIEW IMAGE INPUT UNIT

201 ENCODING TARGET IMAGE INPUT UNIT

202 ENCODING TARGET IMAGE MEMORY

215 RELIABILITY SETTING UNIT

207 PREDICTION IMAGE GENERATION METHOD EVALUATION UNIT

209 PREDICTION INFORMATION ENCODING UNIT

208 PREDICTION IMAGE GENERATION UNIT

211 IMAGE SIGNAL DECODING UNIT

212 DECODED IMAGE MEMORY

210 IMAGE SIGNAL ENCODING UNIT

213 MULTIPLEXING UNIT

FIG. 16

FIG. 16

MULTI-VIEW IMAGE ENCODING DEVICE ~2002

~206 VIEW SYNTHESIS IMAGE MEMORY

~205 VIEW SYNTHESIS UNIT

~204 REFERENCE VIEW IMAGE MEMORY

~203 REFERENCE VIEW IMAGE INPUT UNIT

~201 ENCODING TARGET IMAGE INPUT UNIT

~202 ENCODING TARGET IMAGE MEMORY

~207 PREDICTION IMAGE GENERATION METHOD EVALUATION UNIT

~209 PREDICTION INFORMATION ENCODING UNIT

~208 PREDICTION IMAGE GENERATION UNIT

~211 IMAGE SIGNAL DECODING UNIT

~212 DECODED IMAGE MEMORY

~210 IMAGE SIGNAL ENCODING UNIT

~213 MULTIPLEXING UNIT

EP 2 651 136 A1

FIG. 17

FIG. 17

2003

MULTI-VIEW IMAGE ENCODING DEVICE

206 VIEW SYNTHESIS IMAGE MEMORY

205 VIEW SYNTHESIS UNIT

204 REFERENCE VIEW IMAGE MEMORY

203 REFERENCE VIEW IMAGE INPUT UNIT

201 ENCODING TARGET IMAGE INPUT UNIT

202 ENCODING TARGET IMAGE MEMORY

215 RELIABILITY SETTING UNIT

207 PREDICTION IMAGE GENERATION METHOD EVALUATION UNIT

209 PREDICTION INFORMATION ENCODING UNIT

208 PREDICTION IMAGE GENERATION UNIT

211 IMAGE SIGNAL DECODING UNIT

212 DECODED IMAGE MEMORY

210 IMAGE SIGNAL ENCODING UNIT

213 MULTIPLEXING UNIT

EP 2 651 136 A1

43

FIG. 18

MULTI-VIEW IMAGE DECODING DEVICE 300

306 VIEW SYNTHESIS IMAGE MEMORY

305 VIEW SYNTHESIS UNIT

304 REFERENCE VIEW IMAGE MEMORY

303 REFERENCE VIEW IMAGE INPUT UNIT

301 CODE DATA INPUT UNIT

302 CODE DATA MEMORY

307 OPTIMAL PREDICTION IMAGE GENERATION UNIT

309 DECODED IMAGE MEMORY

308 IMAGE SIGNAL DECODING UNIT

EP 2 651 136 A1

FIG. 19

```
                    ┌─────────┐
                    │  start  │
                    └─────────┘
                         │
                         ▼            ~/S301
          ┌──────────────────────────────┐
          │     INPUT CODE DATA AND       │
          │    REFERENCE VIEW IMAGE       │
          └──────────────────────────────┘
                         │
                         ▼            ~/S302
          ┌──────────────────────────────┐
          │   GENERATE VIEW SYNTHESIS IMAGE  │
          └──────────────────────────────┘
                         │
                         ▼            ~/S303
          ┌──────────────────────────────┐
          │          blk ← 0              │
          └──────────────────────────────┘
                         │
                         ▼            ~/S304
          ┌──────────────────────────────┐
          │   DECIDE OPTIMAL PREDICTION   │◄───┐
          │   IMAGE GENERATION METHOD     │    │
          └──────────────────────────────┘    │
                         │                     │
                         ▼            ~/S305   │
          ┌──────────────────────────────┐    │
          │   GENERATE PREDICTION IMAGE   │    │
          └──────────────────────────────┘    │
                         │                     │
                         ▼            ~/S306   │
          ┌──────────────────────────────┐    │
          │   DECODE IMAGE TO BE DECODED  │    │
          └──────────────────────────────┘    │
                         │                     │
                         ▼            ~/S307   │
          ┌──────────────────────────────┐    │
          │         blk ← blk + 1         │    │
          └──────────────────────────────┘    │
                         │                     │
                         ▼            ~/S308   │
               ⟨ blk = numBlks ? ⟩─────No─────┘
                         │
                        Yes
                         ▼
                    ┌─────────┐
                    │   end   │
                    └─────────┘
```

FIG. 20

EP 2 651 136 A1

FIG. 21

```
          ( start )
              │
              ▼        S301
  ┌───────────────────────┐
  │   INPUT CODE DATA AND  │
  │  REFERENCE VIEW IMAGE  │
  └───────────────────────┘
              │        S302
              ▼
  ┌───────────────────────┐
  │ GENERATE VIEW SYNTHESIS IMAGE │
  └───────────────────────┘
              │        S303
              ▼
  ┌───────────────────────┐
  │       blk ← 0         │
  └───────────────────────┘
              │        S3035
              ▼
  ┌───────────────────────┐◄─────┐
  │  CALCULATE RELIABILITY │      │
  └───────────────────────┘      │
              │        S304'      │
              ▼                   │
  ┌───────────────────────┐      │
  │ DECIDE OPTIMAL PREDICTION │   │
  │ IMAGE GENERATION METHOD │    │
  └───────────────────────┘      │
              │        S305       │
              ▼                   │
  ┌───────────────────────┐      │
  │  GENERATE PREDICTION IMAGE │  │
  └───────────────────────┘      │
              │        S306       │
              ▼                   │
  ┌───────────────────────┐      │
  │ DECODE IMAGE TO BE DECODED │  │
  └───────────────────────┘      │
              │        S307       │
              ▼                   │
  ┌───────────────────────┐      │
  │     blk ← blk + 1     │      │
  └───────────────────────┘      │
              │        S308       │
              ▼                   │
       ⟨ blk = numBlks ? ⟩──No────┘
              │ Yes
              ▼
           ( end )
```

47

FIG. 22

MULTI-VIEW IMAGE DECODING DEVICE 3002

306 VIEW SYNTHESIS IMAGE MEMORY

305 VIEW SYNTHESIS UNIT

304 REFERENCE VIEW IMAGE MEMORY

303 REFERENCE VIEW IMAGE INPUT UNIT

311 OPTIMAL PREDICTION IMAGE GENERATION METHOD DECIDING UNIT

312 PREDICTION IMAGE GENERATION UNIT

309 DECODED IMAGE MEMORY

301 CODE DATA INPUT UNIT

302 CODE DATA MEMORY

308 IMAGE SIGNAL DECODING UNIT

EP 2 651 136 A1

48

FIG. 23

TIME →

(A)

| MULTIVIEW IMAGE DECODING DEVICE 300 |

~307
| OPTIMAL PREDICTION IMAGE GENERATION UNIT |

P₁   P₂   P₃   P₄   P₅   P₆

~308
| IMAGE SIGNAL DECODING UNIT |

D₁   D₂   D₃   D₄   D₅

(B)

~311
| OPTIMAL PREDICTION IMAGE GENERATION METHOD DECIDING UNIT |

P₁  P₂  P₃  P₄  P₅  P₆  P₇  P₈  P₉  P₁₀

~308
| IMAGE SIGNAL DECODING UNIT |

D₁  D₂  D₃  D₄  D₅  D₆  D₇  D₈  D₉  D₁₀

| MULTIVIEW IMAGE DECODING DEVICE 3002 |

EP 2 651 136 A1

FIG. 24

MULTI-VIEW IMAGE DECODING DEVICE /3003

- 306 VIEW SYNTHESIS IMAGE MEMORY
- 305 VIEW SYNTHESIS UNIT
- 304 REFERENCE VIEW IMAGE MEMORY
- 303 REFERENCE VIEW IMAGE INPUT UNIT
- 310 RELIABILITY SETTING UNIT
- 311 OPTIMAL PREDICTION IMAGE GENERATION METHOD DECIDING UNIT
- 312 PREDICTION IMAGE GENERATION UNIT
- 309 DECODED IMAGE MEMORY
- 301 CODE DATA INPUT UNIT
- 302 CODE DATA MEMORY
- 308 IMAGE SIGNAL DECODING UNIT

EP 2 651 136 A1

FIG. 25

FIG. 26

```
                        ( start )
                            │
                            ▼                    S401
        ┌───────────────────────────────────────┐
        │   INPUT CODE DATA AND                  │
        │   REFERENCE VIEW IMAGE                 │
        └───────────────────────────────────────┘
                            │
                            ▼                    S402
        ┌───────────────────────────────────────┐
        │   GENERATE VIEW SYNTHESIS IMAGE        │
        └───────────────────────────────────────┘
                            │
                            ▼                    S403
        ┌───────────────────────────────────────┐
        │            blk ← 0                      │
        └───────────────────────────────────────┘
                            │
                            ▼                    S404
        ┌───────────────────────────────────────┐◄────┐
        │         DIVIDE CODE DATA               │     │
        └───────────────────────────────────────┘     │
                            │                          │
                            ▼                    S405   │
        ┌───────────────────────────────────────┐     │
        │   DECODE PREDICTION ACCURACY FLAG      │     │
        └───────────────────────────────────────┘     │
                            │                          │
                            ▼                    S406   │
   Yes  ╱───────────────────────────────────╲  No      │
  ◄─────        flag= 1 ?                     ─────┐    │
        ╲───────────────────────────────────╱     │    │
        │                                          │    │
        ▼  S407                              S408  ▼    │
┌──────────────────────────┐      ┌──────────────────────────┐
│ ESTIMATE PREDICTION IMAGE│      │ DECODE PREDICTION IMAGE   │
│ GENERATION METHOD        │      │ GENERATION METHOD 'mode'  │
│ (SET TO 'mode')          │      └──────────────────────────┘
└──────────────────────────┘                     │
        │                                          │
        │            S409                          │
        └──►┌───────────────────────────────┐◄────┘
            │   GENERATE PREDICTION IMAGE    │
            └───────────────────────────────┘
                            │
                            ▼            S410
            ┌───────────────────────────────┐
            │   GENERATE DECODED IMAGE       │
            └───────────────────────────────┘
                            │
                            ▼            S411
            ┌───────────────────────────────┐
            │        blk ← blk + 1           │
            └───────────────────────────────┘
                            │
                            ▼            S412
         ╱───────────────────────────────╲   No
         ◄      blk = numBlks ?            ────────┘
         ╲───────────────────────────────╱
                       │ Yes
                       ▼
                   ( end )
```

FIG. 27

```
              ( start )
                 │
                 ▼                    S401
    ┌──────────────────────────┐
    │   INPUT CODE DATA AND     │
    │   REFERENCE VIEW IMAGE    │
    └──────────────────────────┘
                 │
                 ▼                    S402
    ┌──────────────────────────┐
    │  GENERATE VIEW SYNTHESIS IMAGE │
    └──────────────────────────┘
                 │
                 ▼                    S403
    ┌──────────────────────────┐
    │        blk ← 0            │
    └──────────────────────────┘
                 │
                 ▼                    S404
    ┌──────────────────────────┐◄──────────────┐
    │     DIVIDE CODE DATA      │               │
    └──────────────────────────┘               │
                 │                             │
                 ▼                    S405      │
    ┌──────────────────────────┐               │
    │ DECODE PREDICTION ACCURACY FLAG │          │
    └──────────────────────────┘               │
                 │                             │
                 ▼                    S407'     │
    ┌──────────────────────────┐               │
    │   ESTIMATE PREDICTION IMAGE │             │
    │ GENERATION METHOD(SET TO 'pmode') │       │
    └──────────────────────────┘               │
                 │                             │
                 ▼                    S406      │
     Yes   ◇──────────────────◇   No           │
    ┌──────┤     flag= 1 ?     ├──────┐        │
    │      ◇──────────────────◇      │        │
    │         S407"                  ▼ S408'   │
┌────────────────┐      ┌──────────────────────┐ │
│ mode ← pmode   │      │  DECODE PREDICTION IMAGE │ │
└────────────────┘      │  GENERATION METHOD 'mode'│ │
    │                   └──────────────────────┘ │
    │                             │             │
    │                  S409        │             │
    │     ┌──────────────────────────┐          │
    └────►│  GENERATE PREDICTION IMAGE │◄─────────┘
          └──────────────────────────┘          │
                 │                    S410       │
          ┌──────────────────────────┐          │
          │   GENERATE DECODED IMAGE  │          │
          └──────────────────────────┘          │
                 │                    S411       │
          ┌──────────────────────────┐          │
          │        blk ← blk + 1      │          │
          └──────────────────────────┘          │
                 │                    S412       │
          ◇──────────────────────◇  No          │
          │    blk = numBlks ?     ├─────────────┘
          ◇──────────────────────◇
                 │ Yes
                 ▼
              ( end )
```

FIG. 28

FIG. 29

MULTI-VIEW IMAGE DECODING DEVICE 4002

- 412 DECODED IMAGE MEMORY
- 410 PREDICTION IMAGE GENERATION UNIT
- 411 IMAGE SIGNAL DECODING UNIT
- 409 PREDICTION IMAGE GENERATION METHOD EVALUATION UNIT
- 408 PREDICTION INFORMATION DECODING UNIT
- 407 DIVIDING UNIT
- 402 CODE DATA MEMORY
- 406 VIEW SYNTHESIS IMAGE MEMORY
- 405 VIEW SYNTHESIS UNIT
- 404 REFERENCE VIEW IMAGE MEMORY
- 403 REFERENCE VIEW IMAGE INPUT UNIT
- 401 CODE DATA INPUT UNIT

FIG. 30

EP 2 651 136 A1

FIG. 31

FIG. 32

CPU ~60

MEMORY ~61

CODE DATA INPUT UNIT (STORAGE UNIT) ~62

REFERENCE VIEW IMAGE INPUT UNIT (STORAGE UNIT) ~63

PROGRAM STORAGE UNIT ~64

MULTIVIEW IMAGE DECODING PROGRAM ~641

DECODED IMAGE OUTPUT UNIT (STORAGE UNIT) ~65

EP 2 651 136 A1

<div align="center">

**INTERNATIONAL SEARCH REPORT**

</div>

| | International application No. |
|---|---|
| | PCT/JP2011/078065 |

**A. CLASSIFICATION OF SUBJECT MATTER**
*H04N7/32*(2006.01)i, *H04N13/02*(2006.01)i

According to International Patent Classification (IPC) or to both national classification and IPC

**B. FIELDS SEARCHED**

Minimum documentation searched (classification system followed by classification symbols)
H04N7/26-7/68, H04N13/00-15/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2008-271217 A (KDDI Corp.),<br>06 November 2008 (06.11.2008),<br>paragraphs [0001] to [0011], [0026] to [0051];<br>fig. 1 to 2<br>(Family: none) | 1-18 |
| A | JP 2007-282014 A (Mega Chips LSI Solutions Inc.),<br>25 October 2007 (25.10.2007),<br>abstract; paragraphs [0004] to [0011], [0024] to [0061]; fig. 1 to 12<br>& WO 2007/116617 A1 | 1-18 |

☒ Further documents are listed in the continuation of Box C.     ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 14 February, 2012 (14.02.12) | 28 February, 2012 (28.02.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2011/078065

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2010-226528 A (Canon Inc.), 07 October 2010 (07.10.2010), abstract; paragraphs [0003] to [0013], [0021] to [0046]; fig. 1 to 4 (Family: none) | 1-18 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010271259 A

**Non-patent literature cited in the description**

- Advanced video coding for generic audiovisual services. *Rec. ITU-T H.264,* March 2009
- **K. MCCANN ; W.-J. HAN ; I. KIM.** Samsung's Response to the Call for Proposals on Video Compression Technology. *Input Document to Joint Collaborative Team on Video Coding (JCT-VC) of ITU-T SG16 WP3 and ISO/IEC JTC1/SC29/WG11, JCTVC-A124,* April 2010
- **S. SHIMIZU ; M. KITAHARA ; H. KIMATA ; K. KAMIKURA ; Y. YASHIMA.** View scalable Multiview Video Coding Using 3-D Warping with Depth Map. *IEEE Transactions on Circuits and Systems for Video Technology,* November 2007, vol. 17 (11), 1485-1495
- **Y. MORI ; N. FUKUSHIMA ; T. FUJI ; M. TANIMOTO.** View Generation with 3D warping Using Depth Information for FTV. *Proceedings of 3DTV-CON2008,* May 2008, 229-232
- **S. YEA ; A. VETRO.** View Synthesis Prediction for Rate-Overhead Reduction in FTV. *Proceedings of 3DTV-CON2008,* May 2008, 145-148
- **J. SUN ; N. ZHENG ; H. SHUM.** Stereo Matching Using Belief Propagation. *IEEE Transactions on Pattern Analysis and Machine Intelligence,* July 2003, vol. 25 (7), 787-800
- **S. SHIMIZU ; Y. TONOMURA ; H. KIMATA ; Y. OHTANI.** Improved View Interpolation Prediction for Side Information in Multiview Distributed Video Coding. *Proceedings of ICDSC2009,* August 2009
- **K. YAMAMOTO ; M. KITAHARA ; H. KIMATA ; T. YENDO ; T. FUJI ; M. TANIMOTO ; S. SHIMIZU ; K. KAMIKURA ; Y. YASHIMA.** Multiview Video Coding Using View Interpolation and Color Correction. *IEEE Transactions on Circuits and Systems for Video Technology,* 2007, vol. 17 (11), 1436-1449
- **K. UGUR ; K. R. ANDERSON ; A. FULDSETH.** Description of video coding technology proposal by Tandberg, Nokia, Ericsson. *Input Document to Joint Collaborative Team on Video Coding (JCT-VC) of ITU-T SG16 WP3 and ISO/IEC JTC1/SC29/WG11, JCTVC-A119,* April 2010